(19) Europäisches Patentamt
European Patent Office
Office européen des brevets

(11) EP 4 462 847 A1

(12) EUROPEAN PATENT APPLICATION
published in accordance with Art. 153(4) EPC

(43) Date of publication:
13.11.2024 Bulletin 2024/46

(51) International Patent Classification (IPC):
H04W 24/02 (2009.01) H04L 5/00 (2006.01)

(21) Application number: 22918350.4

(22) Date of filing: 09.12.2022

(52) Cooperative Patent Classification (CPC):
H04L 5/00; H04W 24/02; H04W 24/08; H04W 24/10

(86) International application number:
PCT/CN2022/137944

(87) International publication number:
WO 2023/130900 (13.07.2023 Gazette 2023/28)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 07.01.2022 CN 202210015946

(71) Applicant: Datang Mobile Communications
Equipment Co., Ltd.
Beijing 100085 (CN)

(72) Inventors:
• SONG, Lei
  Beijing 100085 (CN)
• GAO, Qiubin
  Beijing 100085 (CN)
• SU, Xin
  Beijing 100085 (CN)
• LI, Hui
  Beijing 100085 (CN)
• LUO, Yajuan
  Beijing 100085 (CN)

(74) Representative: Studio Torta S.p.A.
Via Viotti, 9
10121 Torino (IT)

(54) TIMING MEASUREMENT REPORTING METHOD AND APPARATUS, TIMING CONFIGURATION METHOD AND APPARATUS, INFORMATION TRANSMISSION METHOD AND APPARATUS, AND DEVICE

(57) A timing measurement reporting method and apparatus, a timing configuration method and apparatus, and an information transmission method and apparatus, and device are provided. The method includes: performing timing measurement on at least one received first signal to determine timing information; sending the timing information to a network device; wherein the first signal corresponds to at least one piece of first information, and/or, one piece of first information corresponds to one or more first signals, and the first information includes a resource or a high layer parameter.

performing timing measurement on at least one received first signal to determine timing information — S401

sending the timing information to a network device — S402

**Fig. 4**

EP 4 462 847 A1

**Description**

**CROSS REFERENCE TO RELATED APPLICATIONS**

The present disclosure claims the priority to the Chinese patent application No. 202210015946.X, filed in China on January 7, 2022, a disclosure of which is incorporated herein by reference in its entirety.

**TECHNICAL FIELD**

The present disclosure relates to the field of communications technology, and in particular, to a timing measurement reporting method and apparatus, a timing configuration method and apparatus, and an information transmission method and apparatus, and device.

**BACKGROUND**

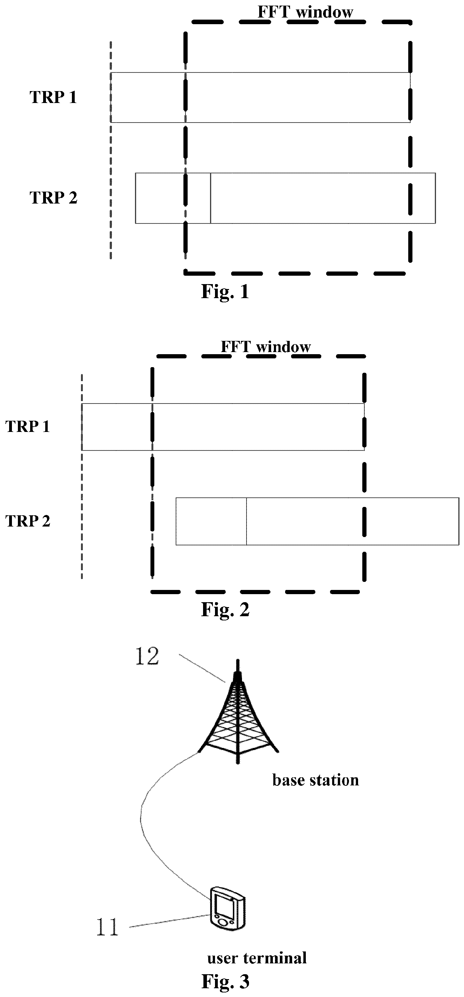

In the research on multi-Transmission Reception Point (TRP) transmission technology in Release 16 (Rel-16) or Release 17 (Rel-17), it is assumed that the time differences for signals from multiple TRPs arriving at the terminal are all less than the Cyclic Prefix (CP) length, that is, the multiple TRPs are synchronized. When the time difference of signals transmitted by two TRPs arriving at the terminal exceeds the CP length, it is referred to as an asynchronous TRP scenario. Figs. 1 and 2 show the synchronous and the asynchronous TRP scenario respectively, as a comparison. For example, it assumes that there are two TRPs. In a synchronous TRP scenario, a same timing can be used to receive the signals from both TRPs. For example, the receiving based on the timing of TRP1 allows the terminal to receive all the signals, except for the CP, in one symbol of TRP1 within a Fast Fourier Transform (FFT) window; the terminal can also receive the cyclically shifted signal in one symbol of TRP2. According to Orthogonal Frequency Division Multiplexing (OFDM) demodulation theory, the terminal can restore the signals sent by both TRPs.

For an asynchronous TRP scenario, if the timing of the TRP1 is still used to receive the signals from both TRPs within an FFT window, the terminal can receive all the signals, except for the CP, in one symbol of TRP1. However, the received TRP2 signal will include signals in the previous symbol, introducing inter-symbol interference. This situation prevents the terminal from correctly receiving the signal sent by TRP2.

When the sending timings of the two TRPs are not exactly the same, i.e., the signal sending timings from the two TRPs are different, the possibility that the reception time difference exceeds the CP length further increases. In this case, regardless of which TRP's timing the terminal uses to set its reception timing, the signals from the other TRP cannot be correctly received.

A similar scenario exists for the uplink transmission. If the terminal sends a signal with a certain timing advance based on the timing of the TRP1, it will cause that the timing for the signal to arrive at TRP2 and the processing timing of TRP2 are different, thus degrading the performance of the uplink signal reception.

**SUMMARY**

An embodiment of the present disclosure provides a method, apparatus, and device for timing measurement reporting, timing configuration, and information transmission, to solve the problem of degraded transmission performance in the asynchronous TRP scenario.

To solve the above technical problem, an embodiment of the present disclosure provides a timing measurement reporting method, including:

> performing timing measurement on at least one received first signal to determine timing information;
> sending the timing information to a network device;
> wherein the first signal corresponds to at least one piece of first information, and/or, one piece of first information corresponds to one or more first signals, and the first information includes a resource or a high layer parameter.

Optionally, the first signal includes at least one of the followings:
a synchronization signal;

> a synchronization signal and a physical broadcast channel block;
> a Tracking Reference Signal (TRS);
> a Positioning Reference Signal (PRS); or
> a Channel State Information Reference Signal (CSI-RS).

Optionally, a determination of the first signal includes at least one of the followings:

> that the first signal is predefined; or
> that the first signal is configured by a network device.

Optionally, in the case that the first signal is configured by the network device, the method further includes:

> receiving at least one signal set configured by the network device;
> wherein each of the at least one signal set includes at least one first signal.

Optionally, the sending the timing information to the network device includes at least one of the followings:

> sending the timing information to the network device during a Channel State Information (CSI) reporting process;
> sending the timing information to the network device during an information transmission process other than the CSI reporting process;
sending the timing information to the network device when a timing reporting condition is met;
sending the timing information to the network device through Radio Resource Control (RRC) signaling.

Optionally, in the case that sending the timing information to the network device when the timing reporting condition is met, the sending the timing information to the network device includes at least one of the followings:

sending the timing information to the network device through first signaling;
wherein the first signaling includes at least one of the followings:

Uplink Control Information (UCI);
a Media Access Control Control Element (MAC CE);
a Random Access CHannel (RACH);
beam failure recovery information; or
Maximum Permissible Exposure (MPE) reporting information.

Optionally, the timing information is represented by at least one of the followings:

a time difference;
a timing number; or
a relationship with an operation timing.

Optionally, the time difference is represented by at least one of the followings:

the time difference between a measured timing and the operation timing;
the time difference between first signals corresponding to different first information respectively; or
the time difference of receiving at least one first signal.

Optionally, the timing number is represented by at least one of the followings:

a relationship between the timing number and the first information;
a relationship between the timing number and the at least one first signal or between the timing number and the at least one signal set, wherein each of the at least one signal set including at least one first signal; or
the operation timing and a timing other than the operation timing.

Optionally, the relationship between the timing number and the first information is represented by at least one of the followings:

a correspondence between the timing number and the resource;
a correspondence between the timing number and a control resource set pool index; or
a correspondence between the timing number and a physical cell identity.

Optionally, the timing information reporting includes at least one of the followings:

carrying timing reporting information related to CSI;
carrying CSI related to the timing information; or
carrying a Channel state information reference signal Resource Indicator (CRI) corresponding to the timing information, or, a Synchronization Signal and Broadcast channel block Resource Indicator (SSBRI).

Optionally, the method for timing measurement reporting, further including:

sending a measurement condition to the network device;
wherein the measurement condition includes one of the followings:

that timing information is related to the beam; or
that timing information is not related to the beam.

Optionally, after sending the timing information to the network device, the method further includes:

receiving timing configuration information sent by the network device, wherein the timing configuration information includes a relationship between the timing and second information;
receiving or sending the second information based on the timing related to the second information;
wherein the second information includes at least one of the followings:

a physical channel; or
a signal.

An embodiment of the present disclosure further provides a timing configuration method, including:

determining a timing;
sending timing configuration information to a terminal device;
wherein the timing configuration information includes a relationship between the timing and second information;
wherein the second information includes at least one of the followings:

a physical channel; or
a signal.

Optionally, the timing includes at least one of the followings:

a downlink timing;
an uplink timing; or
an uplink timing advance.

Optionally, the determining the timing includes at least one of the followings:

determining the timing based on a chronological order of timings;
determining the timing based on the chronological order of timings under a number corresponding to a same third information, wherein the third information includes a radio frame, a slot, or a symbol;
determining the timing based on a predefined manner;
determining the timing based on a network side configuration;
determining different timings based on reception timings of uplink signals;
determining different timings based on a current timing;
determining different timings based on a transmission configuration indication or a spatial relationship;
determining different timings based on a value of the Timing Advance (TA);
determining different timings based on a parameter configured by a high layer; or
determining timing based on timing information reported by the terminal.

Optionally, the parameter configured by a high layer includes CORESETPoolIndex.

Optionally, before the determining the timing, the method further includes:

receiving an uplink signal sent by the terminal device; or
receiving timing information sent by the terminal device, wherein the terminal device measures a timing of at least one first signal to determine the timing information, the first signal corresponds to at least one piece of first information, and/or, one piece of first information corresponds to one or more first signals; and the first information including a resource or a high layer parameter.

An embodiment of the present disclosure further provides an information transmission method, including:

obtaining timing configuration information, wherein the timing configuration information includes: a relationship between a timing and second information;
receiving or sending the second information based on the timing associated with the second information;

wherein the second information includes at least one of the followings:

a physical channel; or
a signal.

Optionally, obtaining the timing configuration information includes one of the followings:

receiving the timing configuration information sent by a network device;
determining the timing configuration information based on a predefined manner.

Optionally, the relationship between the timing and the second information is determined by at least one of the followings:

determining the relationship between the timing and the second information based on a chronological order of timings;
determining the relationship between the timing and the second information based on the chronological order of timings under a number corresponding to a same third information, wherein the third information includes a radio frame, a slot, or a symbol;
determining the relationship between the timing and the second information based on a predefined manner;
determining the relationship between the timing and the second information based on a network side configuration;
determining the relationship between the timing and the second information based on a reception timing of an uplink signal;
determining the relationship between the timing and the second information based on a current timing;
determining the relationship between the timing and the second information based on a transmission configuration indication or spatial relationship;
determining the relationship between the timing and the second information based on a value of the Timing Advance (TA); or
determining the relationship between the timing and the second information based on a parameter configured by a high layer.

An embodiment of the present disclosure further provides a terminal device, including: a memory, a transceiver, and a processor:
the memory is configured to store a computer program; the transceiver is configured to receive and send data under the control of the processor; the processor is configured to read the computer program in the memory and perform the following operations:

performing a timing measurement on the at least one received first signal to determine timing information;
sending the timing information to a network device through the transceiver;
wherein the first signal corresponds to at least one piece of first information, and/or, one piece of first information corresponds to one or more first signals, and the first information includes a resource or a high layer parameter.

Optionally, the first signal includes at least one of the followings:

a synchronization signal;
a synchronization signal and a physical broadcast channel block;
a Tracking Reference Signal (TRS);
a Positioning Reference Signal (PRS); or
a Channel State Information Reference Signal (CSI-RS).

Optionally, a determination of the first signal includes at least one of the followings:

that the first signal is predefined; or
that the first signal is configured by the network device.

Optionally, in the case that the first signal is configured by the network device, further including:

receiving at least one signal set configured by the network device;
wherein each of the at least one signal set includes at least one first signal.

Optionally, sending the timing information to the network device includes at least one of followings:

sending the timing information to the network device during a Channel State Information (CSI) reporting process;
sending the timing information to the network device during an information transmission process other than the CSI reporting process;
sending the timing information to the network device when a timing reporting condition is met;
sending the timing information to the network device through Radio Resource Control (RRC) signaling.

Optionally, in the case that sending the timing information to the network device when the timing reporting condition is met, the sending the timing information to the network device includes at least one of the followings:

sending the timing information to the network device through first signaling;
wherein the first signaling includes at least one of the followings:

Uplink Control Information (UCI);
a Media Access Control Control Element (MAC CE);
a Random Access CHannel (RACH);
beam failure recovery information; or
Maximum Permissible Exposure (MPE) reporting information.

Optionally, the timing information is represented by at least one of the followings:

a time difference;
a timing number; or
a relationship with an operation timing.

Optionally, the time difference is represented by at least one of the followings:

the time difference between a measured timing and the operation timing;
the time difference between first signals corresponding to different first information respectively; or
the time difference of receiving at least one first signal.

Optionally, the timing number is represented by at least one of the followings:

a relationship between the timing number and the first information;
a relationship between the timing number and the at least one first signal or between the timing number and the at least one signal set, wherein each of the at least one signal set including at least one first signal; or
the operation timing and a timing other than the operation timing.

Optionally, the relationship between the timing number and the first information is represented by at least one of the followings:

a correspondence between the timing number and the resource;
a correspondence between the timing number and a control resource set pool index; or
a correspondence between the timing number and a physical cell identity.

Optionally, the timing information reporting includes at least one of the followings:

carrying timing reporting information related to CSI;
carrying CSI related to the timing information; or
carrying a Channel state information reference signal Resource Indicator (CRI) corresponding to the timing information, or, a Synchronization Signal and Broadcast channel block Resource Indicator (SSBRI).

Optionally, the terminal device, further including:

sending a measurement condition to the network device;
wherein the measurement condition includes one of the followings:

that timing information is related to the beam; or
that timing information is not related to the beam.

Optionally, after sending the timing information to the network device, further including:

receiving timing configuration information sent by the network device, wherein the timing configuration information includes a relationship between the timing and second information;
receiving or sending the second information based on the timing related to the second information;
wherein the second information includes at least one of the followings:

a physical channel; or
a signal.

An embodiment of the present disclosure further provides a network device, including: a memory, a transceiver, and a processor:
the memory is configured to store a computer program;
the transceiver is configured to receive and send data under the control of the processor; the processor is configured to read the computer program in the memory and perform the following operations:

determining a timing;
sending timing configuration information to a terminal device;
wherein the timing configuration information includes a relationship between the timing and second information;
wherein the second information includes at least one of the followings:

a physical channel; or
a signal.

Optionally, the timing includes at least one of the followings:

a downlink timing;
an uplink timing; or
an uplink timing advance.

Optionally, the determining the timing includes at least one of the followings:

determining the timing based on a chronological order of timings;
determining the timing based on the chronological order of timings under a number corresponding to a same third information, wherein the third information includes a radio frame, a slot, or a symbol;
determining the timing based on a predefined manner;
determining the timing based on a network side configuration;
determining different timings based on reception timings of uplink signals;
determining different timings based on a current timing;
determining different timings based on a transmission configuration indication or a spatial relationship;
determining different timings based on a value of the Timing Advance (TA);
determining different timings based on a parameter configured by a high layer; or
determining timing based on timing information reported by the terminal.

Optionally, the parameter configured by a high layer includes CORESETPoolIndex.
Optionally, before the determining the timing, further including:

receiving an uplink signal sent by the terminal device; or
receiving timing information sent by the terminal device, wherein the terminal device measures a timing of at least one first signal to determine the timing information, the first signal corresponds to at least one piece of first information, and/or, one piece of first information corresponds to one or more first signals; and the first information including a resource or a high layer parameter.

An embodiment of the present disclosure further provides a terminal device, including: a memory, a transceiver, and a processor:
the memory is configured to store a computer program;
the transceiver is configured to receive and send data under the control of the processor; the processor is configured to read the computer program in the memory and perform the following operations:

obtaining timing configuration information, wherein the timing configuration information includes: a relationship between a timing and second information;
receiving or sending the second information based on the timing associated with the second information;
wherein the second information includes at least one of the followings:

a physical channel; or

a signal.

Optionally, obtaining the timing configuration information includes one of the followings:

receiving the timing configuration information sent by a network device;
determining the timing configuration information based on a predefined manner.

Optionally, the relationship between the timing and the second information is determined by at least one of the followings:

determining the relationship between the timing and the second information based on a chronological order of timings;
determining the relationship between the timing and the second information based on the chronological order of timings under a number corresponding to a same third information, wherein the third information includes a radio frame, a slot, or a symbol;
determining the relationship between the timing and the second information based on a predefined manner;
determining the relationship between the timing and the second information based on a network side configuration;
determining the relationship between the timing and the second information based on a reception timing of an uplink signal;
determining the relationship between the timing and the second information based on a current timing;
determining the relationship between the timing and the second information based on a transmission configuration indication or spatial relationship;
determining the relationship between the timing and the second information based on a value of the Timing Advance (TA); or
determining the relationship between the timing and the second information based on a parameter configured by a high layer.

An embodiment of the present disclosure further provides a timing measurement reporting apparatus, including:

a first determination unit is configured to perform timing measurement on at least one received first signal to determine timing information;
a first sending unit is configured to send the timing information to a network device;
wherein the first signal corresponds to at least one piece of first information, and/or, one piece of first information corresponds to one or more first signals, and the first information includes a resource or a high layer parameter.

Optionally, the first signal includes at least one of the followings:

a synchronization signal;
a synchronization signal and a physical broadcast channel block;
a Tracking Reference Signal (TRS);
a Positioning Reference Signal (PRS); or
a Channel State Information Reference Signal (CSI-RS).

Optionally, a determination of the first signal includes at least one of the followings:

that the first signal is predefined; or
that the first signal is configured by a network device.

Optionally, in the case that the first signal is configured by the network device, further including:

receiving at least one signal set configured by the network device;
wherein each of the at least one signal set includes at least one first signal.

Optionally, the sending the timing information to the network device includes at least one of the followings:

sending the timing information to the network device during a Channel State Information (CSI) reporting process;
sending the timing information to the network device during an information transmission process other than the CSI reporting process;
sending the timing information to the network device when a timing reporting condition is met;
sending the timing information to the network device through Radio Resource Control (RRC) signaling.

Optionally, in the case that sending the timing information to the network device when the timing reporting condition is met, the sending the timing information to the network device includes at least one of the followings:

sending the timing information to the network device through first signaling;
wherein the first signaling includes at least one of the followings:

Uplink Control Information (UCI);
a Media Access Control Control Element (MAC CE);
a Random Access CHannel (RACH);
beam failure recovery information; or
Maximum Permissible Exposure (MPE) reporting information.

Optionally, the timing information is represented by at least one of the followings:

a time difference;
a timing number; or
a relationship with an operation timing.

Optionally, the time difference is represented by at least one of the followings:

the time difference between a measured timing and the operation timing;
the time difference between first signals corresponding to different first information respectively; or
the time difference of receiving at least one first signal.

Optionally, the timing number is represented by at least one of the followings:

a relationship between the timing number and the first information;
a relationship between the timing number and the at least one first signal or between the timing number and the at least one signal set, wherein each of the at least one signal set including at least one first signal; or
the operation timing and a timing other than the operation timing.

Optionally, the relationship between the timing number and the first information is represented by at least one of the followings:

a correspondence between the timing number and the resource;
a correspondence between the timing number and a control resource set pool index; or
a correspondence between the timing number and a physical cell identity.

Optionally, the timing information reporting includes at least one of the followings:

carrying timing reporting information related to CSI;
carrying CSI related to the timing information; or
carrying a Channel state information reference signal Resource Indicator (CRI) corresponding to the timing information, or, a Synchronization Signal and Broadcast channel block Resource Indicator (SSBRI).

Optionally, the measurement reporting apparatus, further including:

sending a measurement condition to the network device;
wherein the measurement condition includes one of the followings:

that timing information is related to the beam; or
that timing information is not related to the beam.

Optionally, after sending the timing information to the network device, further including:

receiving timing configuration information sent by the network device, wherein the timing configuration information includes a relationship between the timing and second information;
receiving or sending the second information based on the timing related to the second information;
wherein the second information includes at least one of the followings:

a physical channel; or
a signal.

An embodiment of the present disclosure further provides a timing configuration apparatus, including:

a second determining unit is configured to determine a timing;
a second sending unit is configured to send timing configuration information to a terminal device;
wherein the timing configuration information includes a relationship between the timing and second information;
wherein the second information includes at least one of the followings:

a physical channel; or
a signal.

Optionally, the timing includes at least one of the followings:

a downlink timing;
an uplink timing; or
an uplink timing advance.

Optionally, the determining the timing includes at least one of the followings:

determining the timing based on a chronological order of timings;
determining the timing based on the chronological order of timings under a number corresponding to a same third information, wherein the third information includes a radio frame, a slot, or a symbol;
determining the timing based on a predefined manner;
determining the timing based on a network side configuration;
determining different timings based on reception timings of uplink signals;
determining different timings based on a current timing;

determining different timings based on a transmission configuration indication or a spatial relationship;

determining different timings based on a value of the Timing Advance (TA);

determining different timings based on a parameter configured by a high layer; or

determining timing based on timing information reported by the terminal.

Optionally, the parameter configured by a high layer includes CORESETPoolIndex.

Optionally, before the determining the timing, further including:

receiving an uplink signal sent by the terminal device; or

receiving timing information sent by the terminal device, wherein the terminal device measures a timing of at least one first signal to determine the timing information, the first signal corresponds to at least one piece of first information, and/or, one piece of first information corresponds to one or more first signals; and the first information including a resource or a high layer parameter.

An embodiment of the present disclosure further provides an information transmission apparatus, including:

a first acquisition unit configured to obtain timing configuration information, wherein the timing configuration information includes: a relationship between a timing and second information;

a first transmission unit configured to receive or send the second information based on the timing associated with the second information;

wherein the second information includes at least one of the followings:

a physical channel; or
a signal.

Optionally, obtaining the timing configuration information includes one of the followings:

receiving the timing configuration information sent by a network device;

determining the timing configuration information based on a predefined manner.

Optionally, the relationship between the timing and the second information is determined by at least one of the followings:

determining the relationship between the timing and the second information based on a chronological order of timings;

determining the relationship between the timing and the second information based on the chronological order of timings under a number corresponding to a same third information, wherein the third information includes a radio frame, a slot, or a symbol;

determining the relationship between the timing and the second information based on a predefined manner;

determining the relationship between the timing and the second information based on a network side configuration;

determining the relationship between the timing and the second information based on a reception timing of an uplink signal;

determining the relationship between the timing and the second information based on a current timing;

determining the relationship between the timing and the second information based on a transmission configuration indication or spatial relationship;

determining the relationship between the timing and the second information based on a value of the Timing Advance (TA); or

determining the relationship between the timing and the second information based on a parameter configured by a high layer.

An embodiment of the present disclosure further provides a processor-readable storage medium. The processor-readable storage medium stores a computer program, wherein the computer program is used to cause the processor to execute the aforementioned methods.

The beneficial effect of the present disclosure is as follows. According to the schemes of the present disclosure, it determines timing information by performing a timing measurement on at least one first signal, and sends the timing information to network device to assist the network device to configure the timing information, thereby avoiding the problem of degraded transmission performance in the asynchronous TRP scenario.

## BRIEF DESCRIPTION OF THE DRAWINGS

To more clearly illustrate the technical solutions in the embodiments of the present disclosure or related art, a brief introduction of the drawings needed for the description of the embodiments or related art is provided below. Obviously, the described drawings are only some of the embodiments of the present disclosure. Based on the drawings in the present disclosure, other drawings can be obtained by the person skilled in the art without creative efforts.

Fig. 1 shows a schematic diagram of signal reception by a TRP in a synchronous scenario;
Fig. 2 shows a schematic diagram of signal reception by the TRP in an asynchronous scenario;
Fig. 3 shows a structural diagram of a network system applicable to an embodiment of the present disclosure;

Fig. 4 shows a flowchart of the timing measurement reporting method applied to a terminal device according to an embodiment of the present disclosure;

Fig. 5 shows a schematic diagram of signal reception by a terminal with respect to different TRP transmissions according to FFT windows corresponding to different timings;

Fig. 6 shows a schematic diagram of the relationship between control resource sets and TRPs;

Fig. 7 shows a schematic diagram of the timing relationships among different TRPs;

Fig. 8 shows a flowchart of the timing configuration method applied to a network device according to an embodiment of the present disclosure;

Fig. 9 shows a flowchart of the information transmission method applied to a terminal device according to an embodiment of the present disclosure;

Fig. 10 shows a schematic diagram of the units of the timing measurement reporting apparatus according to an embodiment of the present disclosure;

Fig. 11 shows a structural diagram of the terminal device according to an embodiment of the present disclosure;

Fig. 12 shows a schematic diagram of the units of the timing configuration apparatus according to an embodiment of the present disclosure;

Fig. 13 shows a structural diagram of the network device according to an embodiment of the present disclosure;

Fig. 14 shows a schematic diagram of the units of the information transmission apparatus according to an embodiment of the present disclosure.

## DETAILED DESCRIPTION

The technical solutions in the embodiments of the present disclosure will be clearly and completely described in conjunction with the accompanying drawings. It is evident that the described embodiments are part of the embodiments of the present disclosure, but not all of them. Based on the embodiments in the present disclosure, all other embodiments obtained by the person skilled in the art without creative efforts shall fall within the protection scope of the present disclosure.

The terms "first", "second", etc., in the description and claims of the present disclosure are used to distinguish similar objects and not necessarily to describe a specific order or sequence. It should be understood that such data can be interchanged under appropriate circumstances so that the embodiments of the present disclosure described herein can be implemented in other sequences than those illustrated or described herein. Furthermore, the terms "comprises" and "has" as well as any variations thereof, are intended to cover non-exclusive inclusion. For example, a process, method, system, product, or device including a series of steps or units is not limited to those steps or units explicitly listed, but may include others that are not explicitly listed or inherent to these processes, methods, products, or devices.

In the embodiments of the present disclosure, the term "and/or" describes associated object relationships and indicates that three relationships may exist, for example, A and/or B can mean: A alone, both A and B, or B alone. The character "|" generally indicates an "or" relationship between related objects before and after it. In the embodiments of the present disclosure, the term "plurality" refers to two or more, and other quantifiers are similarly defined.

In the embodiments of the present disclosure, the words "exemplary" or "for example" are used to indicate examples, illustrations, or explanations. Any embodiment or design scheme described as "exemplary" or "for example" should not be interpreted as preferred or having advantages over other embodiments or design schemes. Rather, the use of the word "exemplary" or "for example" aims to present related concepts in a concrete way.

The following introduces the embodiments of the present disclosure in conjunction with the drawings. The resource configuration method, apparatus, network device, and terminal device provided in the embodiments of the present disclosure can be applied in wireless communication systems. This wireless communication system may adopt the fifth-generation (5G) mobile communication technology (hereinafter referred to as a 5G system). It is understood by the person skilled in the art that the 5G New Radio (NR) system is merely an example, not a limitation.

Fig. 3 is a structural diagram of a network system applicable to embodiments of the present disclosure. As shown in Fig 3, it includes a user terminal 11 and a base station 12, wherein the user terminal 11 can be a User Equipment (UE), such as a mobile phone, a tablet personal computer, a laptop computer, a Personal Digital Assistant (PDA), a Mobile Internet Device (MID), or a wearable device. It should be noted that the specific type of the user terminal 11 is not limited in the embodiments of the present disclosure. The aforementioned base station 12 can be a base station for a 5G or later release (e.g., gNB, 5G NR NB), or a base station in other communication systems, or referred to as Node B. It should be noted that in the embodiments of the present disclosure, the 5G base station is only an example, and the type of base station 12 is not specifically limited herein.

The embodiments of the present disclosure provide methods, apparatuses, and devices for timing measurement reporting, timing configuration, and information transmission to solve the problem of degraded transmission performance in the asynchronous TRP scenario.

The methods and apparatuses are based on a same concept, and since they solve the problem based on the similar principle, their implementations can be referred to each other without redundant description.

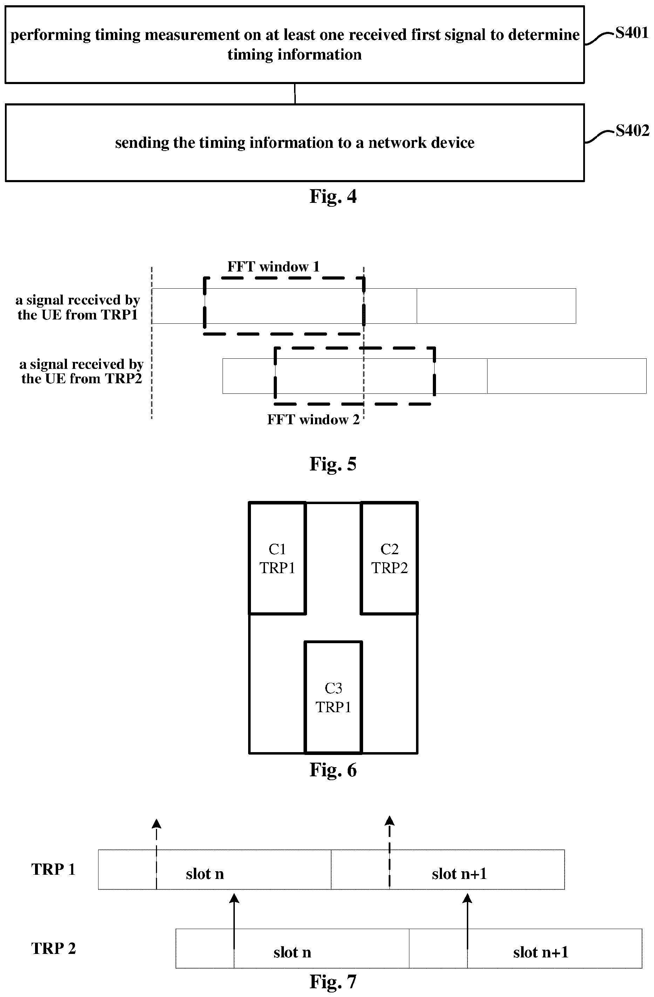

As shown in Fig. 4, the embodiment of the present disclosure provides a method for timing measurement reporting, performed by a terminal device, including:

Step S401, performing timing measurement on at least one received first signal to determine timing information;

Step S402, sending the timing information to a network device;

wherein the first signal corresponds to at least one piece of first information, and/or, one piece of first information corresponds to one or more first signals. It should be noted that, one or more first signals can be understood as part of the at least one received first signal.

It should be noted that the first information includes a resource or a high layer parameter. The resource or the high layer parameter can be considered corresponding to the TRP. That is to say, the terminal performs timing measurement on one or more signals for the TRP, determines the timing information corresponding to one or more TRPs, and sends the timing information to the network side to assist the network side in configuring timing information, thereby avoiding the problem of degraded transmission performance in the asynchronous TRP scenario. For example, it can avoid the problem of inter-symbol interference in the received signals of the TRP, which leads to degraded transmission performance.

Optionally, in the embodiments of the present disclosure, the high layer parameter could be, e.g., the Control Resource Set Pool Index (CORESETPoolIndex) or the Physical Cell Identifier (PCI).

Optionally, the first signal includes at least one of the followings:

A11: a synchronization signal;

A12: a Synchronization Signal (SS) and a Physical Broadcast CHannel (PBCH) block;

A13: a Tracking Reference Signal (TRS);

A14: a Positioning Reference Signal (PRS); or

A 15: a Channel State Information Reference Signal (CSI-RS).

Optionally, it should be further noted that a determination of the first signal includes at least one of the followings.

B 11: that the first signal is predefined. That is to say, the first signal to use is predefined, that is, a specific first signal can be determined by a protocol.

It should be noted that, when there is only one first signal, for example, taking the synchronization signal as an example, if only one signal is used for timing information measurement reporting, the terminal can perform a measurement based on the Primary Synchronization Signal (PSS) or Secondary Synchronization Signal (SSS) in the SS/PBCH block. Since the SS/PBCH block is transmitted periodically, it can be pre-defined that the terminal performs measurement based on the PSS or SSS contained in the SS/PBCH block of each SS/PBCH period being the SS/PBCH block with a specific index value (i.e., preset index value). The specific index value can be one or more; for example, the measurement is performed based on the PSS or SSS in a first SS/PBCH block (i.e., the index being 0) in a half-frame for each SS/PBCH transmission cycle, or the measurement is performed based on the PSS or SSS in first N SS/PBCH blocks (index 0 to index N-1).

In addition to the measuring based on the index value of the SS/PBCH block, the measurement can also be performed based on the PSS or SSS in the first number M of SS/PBCH blocks actually transmitted, where the index value of the SS/PBCH block may exceed M-1.

Furthermore, it is also possible to measure SS/PBCH blocks that meet certain conditions based on the Transmission Configuration Indication (TCI) state or Quasi-co-location (QCL) relationship, such as SS/PBCH blocks with a same QCL relationship in multiple SS/PBCH cycles. For example, two SS/PBCH blocks have the same value of $\left( N_{DM-RS}^{PBCH} \bmod N_{SSB}^{QCL} \right)$, wherein $N_{DM-RS}^{PBCH}$ represents the index of the DeModulation Reference Signal (DMRS) sent by the PBCH in the SS/PBCH block, and $N_{SSB}^{QCL}$ is indicated by a high layer parameter ssb-PositionQCL or MIB, with a possible value like 1, 2, 4, or 8, and "mod" represents the modulo operation. Alternatively, it determines that two SS/PBCH blocks are QCL based on the index of the SS/PBCH block. For another example, the timing measurement can be performed based on the SS/PBCH blocks that are of a same index and are used by the terminal to obtain the MIB, or based on the SS/PBCH blocks associated with PRACH/msgA/msg3 transmissions, etc.

When performing the timing measurement based on the TRS, the PRS, or the CSI-RS, a reference signal set for the timing measurement can also be pre-defined based on its index value, ID value, or QCL relationship.

When measuring using only one first signal, two or more TRPs can use a same physical resource or different physical resources to simultaneously transmit the first signal for the terminal to perform timing measurement; the specific measurement algorithm depends on the implementation by the terminal, which is not limited in the present disclosure.

When measuring using multiple first signals, two or more TRPs can respectively use different physical resources to transmit each first signal for the terminal to perform timing measurement. The specific measurement algorithm depends on the implementation by the terminal, which is not limited in the present disclosure.

For example, in an intra-cell TRP scenario, the reference signal sent by the network side for different TRPs can be the same, such as a same synchronization signal. In an inter-cell TRP scenario, the reference signal sent by the network side for different TRPs can be two different signals.

B 12: that the first signal is configured by the network device.

That is to say, in this case, the specific first signal to be used is configured by the network side, i.e., the specific first signal to be used is notified by the network device.

It should be noted that the network side can configure a signal set in a semi-static manner, which contains either one first signal or multiple first signals, or it can configure more than one signal set, each containing at least one first signal.

Furthermore, the signal set can be configured within the Channel State Information (CSI) measurement reporting framework, that is, the signal set is configured during the CSI reporting process, for example, configured within a CSI resource setting or one or more CSI resource sets; it is also possible to configure one or more signal sets independently without relying on the known measurement reporting framework. In addition, the MAC-CE signaling and/or DCI signaling can be used to dynamically activate or update a signal used for measurement.

The timing information is represented by at least one of the followings.

C11: a time difference.

It should be noted that the time difference is represented by at least one of the followings.

C111: the time difference between a measured timing and the operation timing.

It should be noted that the main operation scenario for timing information measurement reporting is the connected state, where the terminal usually has a basic timing, and then considers performing the MTRP transmission enhancement; the basic timing is the operation timing (also understood as the current operation timing).

That is, in this case, the time difference can be the time difference with respect to the current operation timing. Therefore, when the terminal is caused to measure the time difference, it can measure the time difference between another timing and the current operation timing. After the terminal reports the time difference, the network side can determine the appropriate serving TRP pair for the terminal based on the report, such as choosing multiple TRPs with a time difference less than the CP to serve the terminal. The time difference can be positive, indicating the other timing is after the current operation timing, or negative, indicating the other timing is before the current operation timing. Conversely, it can also be defined, for example, a negative time difference indicating the other timing is after the current operation timing, and a positive time difference indicating the other timing is before the current operation timing. Furthermore, the time difference can be zero. The terminal can measure a time difference based on each signal or a measurement resource, and report the resource index with the smallest time difference and the corresponding time difference.

C112: the time difference between first signals corresponding to different pieces of first information respectively.

For example, the multiple TRPs are distinguished from each other by a resource or a high layer parameter, the resource or the high layer parameter can be predefined or configured or indicated by the network side, i.e., it represents the time difference between one TRP and another TRP. For example, two CSI resource sets correspond to two TRPs respectively, or two CSI reporting settings correspond to two TRPs respectively, or it measures the time difference between the TRP and another TRP based on the configured PCI (as in the inter-cell scenario) or by taking the TRP corresponding to the high layer parameter CORESETPoolIndex being a specific value as a reference. In the measurement reporting, the PCI or CORESETPoolIndex is associated with the measurement resource, the CSI resource set, the CSI resource setting, or a CSI report setting. Therefore, the terminal reports the time difference between the measurement resources corresponding to two PCIs, or the time difference between the measurement resources corresponding to two CORESETPoolIndex values, or reports the time difference between two measurement resources or two CSI resource sets or two CSI resource settings or two CSI report settings. Similarly, the time difference can be positive, negative, or zero.

When reporting a Timing Difference (TD), if multiple TDs are reported at once, such as reporting the timing differences between multiple TRPs or between multiple cells, a differential reporting method can be used, where the maximum TD, minimum TD, maximum positive TD, minimum positive TD, maximum negative TD, or minimum negative TD is reported directly, that is, it quantified and reported directly, while other TDs are reported using a differential reporting method. Another reporting method is to report one TD, wherein the current timing is used as a reference, and the timing difference (TD) between the timing of another cell or TRP and the current timing is reported.

C113: the time difference for receiving at least one first signal.

That is, the time difference can also be the reception time difference of two reference signals. For example, two reference signals are associated with two TRPs respectively and sent by these two TRPs. The two reference signals may be sent in a same symbol or a same slot. The terminal can directly report the reception time difference of the two signals to the network side. Based on the sending time difference of the two reference signals, the network side can determine the propagation delay difference of the two TRPs. For example, if the reception time difference of the two reference signals is T1 and the sending time difference of the two reference signals is T2 (such as being difference from each other by a symbol or multiple symbols, etc.), then the propagation delay difference of the TRPs corresponding to the two reference signals is T1-T2, that is, the terminal receives the time difference for the two TRPs transmitting the same signal at the same time point.

C12: a timing number.

It should be noted that a timing number mainly refers to reporting the sequence number of the timing when reporting timing, for example, if the timing is the first one of the timings, then it is reported as the first timing, and so on.

In other words, in some cases, the network side does not consider the specific time difference between two TRPs, but rather considering the relationship between multiple timings and TRPs. In this case, the terminal can report the relationships between multiple timings and TRPs respectively, so both the network side and the terminal have a common understanding of the timing number. For example, the first to N-th timing respectively represent the timings in sequential order, that is, when the network side sends the same signal, the TRP or cell corresponding to the first timing receives the signal first. Conversely, for example, the TRP or cell corresponding to the N-th timing receives the signal first.

It should also be noted that the timing number can be determined based on the relationship between the timing and the first information (the corresponding TRP). For example, the timing number can be determined according to the measurement resource, the report set, the Control Resource SET Pool Index (CORESETPoolIndex), or the Physical Cell Identity (PCI) associated with the first information. Additionally, the timing number can also be determined based on the operation timing; for example, the operation timing is the first timing and the other timing is the second to the N-th timing.

The terminal can also report an uplink timing in the report, wherein the uplink timing indicates the timing used by the terminal to send a physical channel or a signal, which can be represented as the Timing Advance (TA) relative to the downlink timing. For example, the different sending timings can be adopted by the terminal for different TRP receptions (i.e., corresponding to different TAs), each TA corresponding to a respective timing number.

It should be noted that the terminal device can determine the timing number according to any one or more of following F11-F19.

In other words, the timing number is represented by at least one of the followings.

C121: a relationship between the timing number and the first information;

It should be noted that the relationship between timing number and the first information is represented by at least one of the followings.

C1211: a correspondence between the timing number and the resource;

Optionally, the resource could be a measurement resource or a resource corresponding to the report set.

C1212: a correspondence between the timing number and a Control Resource SET Pool Index (CORESETPoolIndex).

C1213: a correspondence between the timing number and a Physical Cell Identity (PCI).

That is, the terminal can determine and report a chronological order of multiple timings based on the relationship between timing number and the resource, the high layer parameter CORESETPoolIndex, or PCI. For example, it can report in the order of high layer parameter values from smallest to largest, for example, PCI values from smallest to largest are 2, 3, 4, 5, and their corresponding timings are a third timing, a second timing, a first timing, and a fourth timing, respectively. Alternatively, the terminal could report values of the high layer parameters corresponding to the first to the N-th timing, such as the high layer parameters CORESETPoolIndex values corresponding to the first and second timings are 1 and 0, respectively; or the PCI values corresponding to the first to the N-th timings are 3, 5, 2, 4, respectively. In this case, it's essential to determine the relationship between the N timings and the high layer parameters, as shown in C12. The high layer parameters can also be locally encoded, for example, if there are four PCI values, then the PCI values can be associated with local PCI values 0, 1, 2, 3 to reduce feedback overhead, for example, local PCI values 0-3 correspond to absolute PCI values 2-5, respectively.

C122: a relationship between the timing number and the at least one first signal or between the timing number and the at least one signal set.

For example, the terminal determines the relationship between at least one first signal and N timing numbers or between at least one signal set and N timing numbers based on the descending (or ascending) order of timings or the TA value, and reports N timing numbers in the order of the index of the first signal or at least one signal set from smallest to largest during reporting, or reports the index of the corresponding first signal or at least one signal set in the order of N timing numbers from smallest to largest.

The terminal can define n timings based on a measured time difference or an absolute time, such as sequencing them in the order of reception times. The terminal may report the timing numbers associated with the measurement resource (such as the CSI-RS resource, the CSI resource set, the CSI resource setting, or the CSI report setting) to the network side. For example, if the timing information of the second CSI resource set comes after that of the first CSI resource set, the terminal can report the timings of the two CSI resource sets (the first CSI resource set and second CSI resource set) as the second timing and the first timing, respectively.

C123: the operation timing and a timing other than the operation timing.

It should be noted that if the current operation timing corresponds to one TRP, it may determine, after measuring the timing corresponding to another TRP, that the current operation timing is earlier. Therefore, it may reports that the current TRP (i.e., the TRP corresponding to the current operation timing) corresponds to the first timing, and the other TRP (the other timing) corresponds to the second timing.

C13. a relationship with respect to an operation timing;

It should be noted that the relationship indicates whether the measured timing is before or after the current operation timing.

It should be noted that the method herein is similar to the timing number method. If the terminal knows the current operation timing, it can directly report whether another measured timing (different from the current operation timing) is before or after the current operation timing. Alternatively, it can report whether another measured timing is the first timing or the second timing (which is substantially the same as reporting whether another timing is earlier or later).

It should also be noted that the specific timing information reporting method used by the terminal may also be explicitly configured by the network side, such as through a configuration of reporting quantity.

Optionally, the timing information reporting includes at least one of the followings.

D11: carrying timing reporting information related to CSI.

That is, the terminal device considers the CSI while obtaining the timing reporting information.

D12: carrying CSI related to the timing information.

That is, the terminal device considers timing information while obtaining the CSI.

D13: carrying a Channel state information reference signal Resource Indicator (CRI) corresponding to the timing information, or, a Synchronization Signal and Physical Broadcast CHannel Block Resource Indicator (SS/PBCH Block Resource Indicator, SSBRI).

It should be noted that if the TD is used to represent the timing information, it can be any one of the above forms (corresponding to C11, C12, C13, and their sub-items), and the corresponding reporting quantity can be 'TD', 'cri-TD', 'ssb-Index-TD', 'cri1-cri2-TD' or 'ssb-Index1-ssb-Index2-TD'. The included CRI or SSBRI indicates that the timing information is estimated based on the reference signal corresponding to the CRI or SSBRI. The 'cri1-cri2-TD' or 'ssb-Index1-ssb-Index2-TD' indicates that the timing information is estimated based on the reference signals corresponding to two CRIs or SSBRIs. The timing information can also be obtained based on more than two reference signals, such as by averaging; the present disclosure are not limited thereto. Accordingly, it can also include indices corresponding to more than two reference signals.

Furthermore, optionally, the following two measurement conditions (i.e., two assumptions) can be considered when measuring timing information:

measurement condition 1 (i.e., assumption 1): the timing is not related to the beam information (TCI state or QCL relationship); (assuming the beam direction does not affect the final timing result, or the impact is minimal);

measurement condition 2 (i.e., assumption 2): the timing is related to the beam information (TCI state or QCL relationship); (assuming different beam directions lead to different timing results, more accurate but more complex); (once the timing is determined, it will not change due to a beam change, but a beam can still be considered as a factor when determining the timing).

Therefore, when reporting timing information, the terminal can also report the adopted measurement assumption, to provide more scheduling references for the network side. Similarly, the network side can notify the terminal of the measurement assumption, to instruct the terminal to perform measurement reporting using the configured or indicated measurement assumption.

Additionally, when the timing is related to the beam, joint reporting of beam and timing can also be performed. The reporting method can be distinguished from the pure time difference reporting method through the configuration of reporting quantity (corresponding to the high layer parameter reportQuantity). For example, the reporting quantity during the timing information reporting can be configured as 'TD', 'cri-TD', 'ssb-Index-TD', 'cri1-cri2-TD' or 'ssb-Index1-ssb-Index2-TD'. The reporting quantity during joint reporting of beams and timing can be configured as 'cri-RSRP-TD', 'cri-TD-RSRP', 'ssb-Index-RSRP-TD', 'ssb-Index-TD-RSRP', 'TDbeam', 'cri-TDbeam' or 'ssb-Index-TDbeam'. The TDbeam indicates a TD report considering the beam factor (e.g., that L1-RSRP is above a predefined or configured threshold) or a beam report considering the TD factor (e.g., TD is below a predefined or configured threshold, such as less than CP length), while 'cri-RSRP-TD', 'cri-TD-RSRP', 'ssb-Index-RSRP-TD', 'ssb-Index-TD-RSRP' indicates L1-RSRP and TD being reported simultaneously. Similarly, the RSRP can be replaced with the SINR, indicating that the L1-SINR and the TD are reported simultaneously. Similarly, how the terminal measures and processes depends on the terminal's implementation, and the present disclosure are not limited herein.

Optionally, the terminal may also send the measurement condition to the network device; wherein the measurement condition includes one of the followings:

that timing information is related to the beam; or that timing information is not related to the beam

Optionally, the specific implementation for sending the timing information to the network device includes at least one of the followings.

E11: sending the timing information to the network device during a CSI reporting process.

It should be noted that the CSI reporting includes CSI measurement reporting and/or beam measurement reporting.

In this case, the timing information is reported using the beam measurement reporting or CSI measurement reporting framework. The reporting can be periodic, semi-persistent, or aperiodic. The measurement reference signal can be SSB, TRS, CSI-RS, or PRS. A CSI resource setting may include one or more CSI resource sets, each containing one or more reference signals. The reporting quantity can be configured for timing-related information. For example, the network side configures 2 CSI resource sets, each associated with a TRP. The terminal measures one timing information based on one reference signal in each CSI resource set, and multiple timing information can be reported in one report. Another example is measuring and reporting timing information according to two associated CSI reporting settings. Each measurement resource, CSI resource set, CSI resource setting, or CSI reporting setting is associated with one TRP or one cell, allowing the terminal to report the timing difference between two TRPs or cells. The measurement resource, the CSI resource set, the CSI resource setting, or the CSI reporting setting can also be associated with the high layer parameter CORESETPoolIndex or PCI, indicating its relationship with the TRP or the cell.

E12: sending the timing information to the network device during an information transmission process other than the CSI reporting process.

It should be noted that, in this case, a newly defined timing reporting framework is used, and is similar to the CSI reporting framework specified in C 11; it configures the measurement reference signal, such as the TD resource setting, the TD resource set, and TD resource, etc. Similarly, there are a TD report setting and other reporting settings. However, these parameters are independent, different, and not reused from those in the CSI reporting framework, but the reporting function is similar.

E13: sending the timing information to the network device when a timing reporting condition is met.

It should be noted that, in this case, it is the UE-initiated timing information reporting. If the premise is that the gNB always intends to schedule a TRP with a time difference less than the CP to serve the UE, the UE will initiate the timing information reporting once the timing difference between two TRPs exceeds a certain threshold (e.g., a CP length, or a network-configured threshold such as 1/2 or 1/3 of CP length).

At this time, the reference signal used for timing measurement can be predefined or a reference signal set configured by the network side.

Further, it should be noted that sending the timing information to the network device including at least one of the followings.

Sending the timing information to the network device through first signaling, wherein the first signaling includes at least one of the followings.

E131: Uplink Control Information (UCI).

It should be noted that when using the UCI reporting, a periodic or semi-persistent CSI reporting PUCCH resource or a timing reporting PUCCH resource can be used for the report. For example, a 1-bit flag can indicate whether the report is a timing information report initiated by the terminal, such as "1" indicating terminal initiated timing information reporting, "0" indicating regular or base station-configured periodic or semi-persistent CSI reporting or timing reporting. Additionally, the report can only carry an event where the timing difference exceeds a threshold (achieved with a 1-bit flag set to '1'), and it can also carry specific timing information. The specific timing information is similar to that in option 1 and can include one or multiple values, and can be reported using a direct reporting or differential reporting method. The terminal can autonomously choose the reporting quantity or measurement assumption (assumption 1 or assumption 2) and notify the network side of the reporting quantity or measurement assumption during reporting. A SR resource can also be used for reporting to carry the timing information.

E132: a Media Access Control Control Element (MAC CE).

It should be noted that when reporting is performed by using the MAC-CE, a new MAC-CE signaling can be defined and reported in the PUSCH. The reporting information is similar to that in the UCI reporting. A PUCCH-SR resource can also be used to request a PUSCH resource to report more detailed timing information, such as reference signal resource index information, measurement hypothesis information, time difference information, n-th timing information, etc.

E133: a Random Access CHannel (RACH).

It should be noted that, when the reporting is performed by using RACH, the reporting resource and the preamble can be reserved only for timing information reporting, i.e., non-competitive method (CFRA) is used, or can be reported using a competitive method (CBRA).

E134: beam failure recovery information.

E135: Maximum Permissible Exposure (MPE) reporting information.

It should be noted that timing information can be carried using the beam failure information reporting process and the MPE reporting information, wherein it adds a field to indicate that the report is for timing information reporting, so as to distinguish it from the beam failure reporting and the MPE reporting, or it adds a field to indicate that the report is for joint reporting of timing and beam failure, or joint reporting of the timing and the MPE. Similarly, the beam failure reporting or the MPE reporting can be replaced with a PHR (Power Head Room) reporting, that is, using the PHR reporting framework to report timing information, or joint reporting of timing and PHR, with a function similar to the beam failure reporting or MPE reporting. The difference from E132 is that in E132, the MAC-CE signaling is dedicated to timing information reporting, while in E135, when reporting using MAC-CE signaling, it reuses the MAC-CE signaling format of other reporting functions, for independent or joint reporting with other functions.

E14: sending the timing information to the network device through Radio Resource Control (RRC) signaling.

It should be noted that, in this case, it refers to reporting based on a high layer measurement, transmitted on the Physical Uplink Shared CHannel (PUSCH).

Optionally, after the terminal reports timing information, the network side can determine the timing based on the reported information reported by the terminal, and then send timing configuration information to the terminal device;

wherein the timing configuration information includes a relationship between the timing and second information;
wherein the second information includes at least one of the followings:

a physical channel; or
a signal.

Furthermore, after receiving the timing configuration information, the terminal can receive the second information based on the timing associated with the second information or send the second information based on the timing associated with the second information. The sending the second information based on the timing associated with the second information means that the terminal sends different second information based on different TAs respectively. For example, the network side configures PUSCH 1, PUCCH 1, or SRS 1 to be associated with the first timing (TA1) and configures PUSCH 2, PUCCH 2, or SRS 2 to be associated with the second timing (TA2). Thus, the terminal uses TA1 to send PUSCH 1, PUCCH 1, or SRS 1, and uses TA2 to send PUSCH 2, PUCCH 2, or SRS 2.

The relationship between timing and the second information can be a relationship configured by the network side or a relationship determined by the terminal based on a predefined manner.

For example, when the network side configures the relationship, the timing configuration information can be configured within the configuration of the physical channel or physical signal, such as configuring a corresponding timing number or other timing information in the high layer parameter such as PDCCH-config, PDSCH-config, PUSCH-config, or PUCCH-config.

In another example, when the terminal determines the relationship based on a predefined manner, the relationship between timing information and the physical channel is indirectly established through timing and TCI state, spatial relation, or the high layer parameter CORESETPoolIndex, etc. That is, the timing information (first timing, second timing, first TA, second TA, etc.) and the physical channel or physical signal are all related to a same TCI state, spatial relation, or the high layer parameter CORESETPoolIndex, etc., then it is considered that timing information is associated with the physical channel or physical signal.

Optionally, when the timing difference (reception timing difference or sending timing difference) between two TRPs or cells exceeds the CP length, the network side can also configure the terminal to use multiple timings for receiving or sending physical channels or signals. As shown in Fig. 5, the UE demodulates an OFDM signal sent by TRP1 using FFT window 1 based on TRP1's reception timing, and demodulates an OFDM signal sent by TRP2 using FFT window 2 based on TRP2's reception timing. The advantage of this processing is that both TRPs perform the demodulation using the most accurate timing information, reducing inter-symbol interference and improving transmission performance. Similarly, the advantage of the terminal sending TRP1's signal (including physical channel or signal) according to TRP1's sending timing (TA1) and sending TRP2's signal according to TRP2's sending timing (TA2) is that the signal arrival timing at both TRPs can be aligned with the reception timing of both TRPs, improving transmission performance.

It should be noted that, in an embodiment of present disclosure, the timing includes at least one of the followings:

a downlink timing;
an uplink timing; or
an uplink timing advance;
wherein it should be noted that the timing advance is referred to as TA.

Regarding downlink timing, if the terminal uses the timing of TRP2 to demodulate the signal from TRP1, such as PDSCH, severe inter-symbol interference may occur, leading to an inaccurate reception result. Even if the network employs analog beamforming and/or digital beamforming or precoding schemes to pre-eliminate interference between multiple TRPs, the terminal will need to receive all physical channels or physical signals while applying one type of timing if it does not know the relationship between the TRPs or cells and their timings. When using two types of timings, the complexity at the terminal is doubled. For example, in Fig. 6, three CORESEs are associated with two TRPs respectively. When receiving with TRP1's timing, if the terminal does not know which CORESET the timing is associated with, it must blindly detect all SS sets within all CORESEs to prevent from missing PDCCH detection. If the terminal knows that only CORESET 1 and 3 (corresponding to C1 and C3 in Fig. 6) are associated with a a certain timing, it only needs to detect C1 and C3 when receiving with that timing, thereby reducing the terminal's processing complexity compared to the situation where the terminal does not know the relationship between timing and channels.

The uplink timing is similar to the downlink timing. If the terminal uses the timing of the TRP2 to send the signal of the TRP1, it will cause a mismatch between the time that TRP1 receives the useful signal and its reception timing, which will lead to poor signal quality and degraded signal transmission performance. If the network side configures the terminal with the relationship between the uplink timing and the physical channel or signal to allow the terminal to use the related uplink Timing Advance (TA) to send the physical channel or signal, it can improve the signal transmission quality compared to the situation where the terminal does not know the relationship between the timing and the channel.

It assumes that the terminal uses N timings for receiving or sending, namely, the first timing, second timing,.., and N-th timing. Optionally, in an embodiment of the present disclosure, the determining, by the network side, the timing includes at least one of the followings.

F11: determining the timing based on a chronological order of timings.

That is to say, in this case, the N timings can be divided according to a chronological order of timings, for example, the N timings is divided according to the chronological order of the starting times of the FFT windows within a time period, which can be a symbol, a slot, a frame, etc.

F12: determining the timing based on the chronological order of timings subjected to the numbers corresponding to a same third information.

It should be noted that the third information includes a radio frame, a slot, or a symbol, and the third information can be determined based on the network side sending or reception timing, for example, a radio frame, a slot, or a symbol determined by the downlink sending timing or uplink reception timing of a certain TRP or cell at the network side, or all TRPs or cells at the network side that have a same downlink sending timing or uplink reception timing, to determine a radio frame, a slot, or a symbol.

In this case, taking Fig. 7 as an example, the dashed arrow represents the timing of the TRP1, and the solid arrow represents the timing of the TRP2. It can be seen that the slot n determined by the terminal for the TRP1 precedes the slot n determined by the terminal for the TRP2, so the timing of the TRP1 corresponds to the first timing, and the timing of the TRP2 corresponds to the second timing.

F13: determining the timing based on a predefined manner.

It should be noted that, in this case, the n-th timing is determined based on a predefined method, for example, the timing corresponding to a specific TRP or cell is the first timing, and the timings corresponding to other TRPs or cells are the second to N-th timing. A specific TRP or cell may correspond to the timing defined by a high layer parameter CORESETPoolIndex with a particular value (0 or 1), or the minimum (or maximum) CORESETPoolIndex value, or the minimum (or maximum) PCI value. Both the set of PCI values and the set of CORESETPoolIndex values are configured by a network side device. Alternatively, the timing for single-point transmission is the first timing. When the network side configures the terminal for multi-TRP transmission, such as configuring the high layer parameter CORESETPoolIndex, or when TCI of the PDSCH/PDCCH indicates that two TCI states are included, or configuring the high layer parameter repetitionScheme-r16, another timing determined by the terminal (different from the current timing) is referred to as the second timing.

F14: determining the timing based on a network side configuration.

It should be noted that the n-th timing can also be determined based on the network side configuration, such as configuring the CORESETPoolIndex value or PCI value associated with the n-th timing at the network side. The relationship can be configured in a setting of the physical channel or the physical signal, for example, a timing index is configured under a CORESET configuration, wherein n timing indices are 0, 1, 2, ..., N-1 respectively.

F15: determining different timings based on reception timings of uplink signals.

It should be noted that, in this case, the timing is determined based on the uplink estimation: the downlink reception timing or uplink sending timing corresponding to the signal whose reception timing (i.e., reception time) is earlier is defined as the first timing, and the downlink reception timing corresponding to the signal whose reception timing (i.e., reception time) is later is defined as the second timing.

F16: determining different timings based on a current timing.

It should be noted that the downlink reception timing or uplink sending timing corresponding to the current uplink reception timing, uplink sending timing, downlink sending timing, or downlink reception timing is the first timing, and another timing is the second timing. Conversely, it is also possible, for example, the downlink reception timing or uplink sending timing corresponding to the current uplink reception timing, uplink sending timing, downlink sending timing, or downlink reception timing is the second timing, and another timing is the first timing. This method is applicable for determining different downlink timings based on downlink timing, determining different uplink timings based on uplink timing, as well as determining different uplink timings based on downlink timing (e.g., the terminal determines uplink timing based on downlink reception), or determining different downlink timings based on uplink timing (e.g., the network side determines downlink timing based on uplink reception).

F17: determining different timings based on a transmission configuration indication or a spatial relationship (spatial relation info.).

It should be noted that if simultaneous uplink transmission is supported or if two or more TCI states (or spatial relation info.) are configured for reference signals, the first timing and second timing can be respectively associated with two or more configured or determined TCI states (or spatial relation info.).

The TCI state or spatial relationship (spatial relation info) can apply to all physical channels or signals indicated by a same TCI state indication signaling or apply to different physical channels or signals indicated by multiple TCI state indication signalings. For example, when using the same TCI state indication signaling, the TCI states corresponding to all uplink channels or signals, all downlink channels or signals, or all uplink and downlink physical channels or signals are all indicated in one signaling. When the signaling includes two TCI states (or spatial relationships), the first timing and second timing can correspond to the first TCI state (or spatial relationship) and the second TCI state (or spatial relationship) respectively; when the signaling includes three or more TCI states, the terminal can determine that the first timing and second timing correspond to the i-th TCI state (or spatial relationship) and j-th TCI state (or spatial relationship) respectively, and each timing can correspond to multiple TCI states (or spatial relationships). In particular, when the signaling includes two TCI states (or spatial relationships), the first timing can correspond to the first and second TCI states (or spatial relationships), and the second timing can correspond to the third and fourth TCI states (or spatial relationships); or the first timing can correspond to the first and third TCI states (or spatial relationships), and the second timing can correspond to the second and fourth TCI states (or spatial relationships).

When using multiple signalings to indicate TCI states (or spatial relationships), the method is similar. For example, in the downlink transmission, it uses the transmission configuration indication field in DCI to indicate the TCI state of PDSCH, and in the uplink transmission, it uses a MAC-CE signaling to indicate the spatial relationship of the PUCCH. The terminal can determine the respective relationship between the timing and the TCI state (spatial relationship) based on each indication signaling; for example, the first timing is related to the first one of the TCI states in each indication signaling, and the second timing is related to the second one of the TCI states in each indication signaling.

F18: determining different timings based on a parameter configured by a high layer.

Optionally, the parameter configured by the high layer may be the control resource set pool index.

F19: determining different timings based on a value of the Timing Advance (TA).

It should be noted that, in this case, it determines the uplink timing, with the first to N-th timing being determined based on the TA values from smallest to largest or from largest to smallest respectively.

It should be noted that F11-F19 are considered for multiple timing sending or receiving, and both the network side and the terminal need to have a common understanding of the n-th timing. The network side can also estimate, based on an uplink-downlink reciprocity, downlink reception timing information by using the uplink signal sent by the terminal. In other words, in this case, the network side needs to firstly receive the uplink signal sent by the terminal device. The advantage of this approach is that the timing information is obtained through a measurement by the network side, resulting in a simplified processing procedure. Similarly, the terminal can estimate, based on the uplink-downlink reciprocity, uplink sending timing information by using the downlink signal sent by the network side.

It should also be noted that the aforementioned F11-F19 are applicable to both the uplink timing and the downlink timing.

In the method where the network side estimates the time difference based on the uplink signal sent by the terminal, for example, the estimation method for positioning can be used to estimate the time difference between two TRP receptions of SRS (configured with high layer parameter SRS-PosResource), and it configures the relationship between the n-th timing and the n-th channel/signal for the terminal based on the estimated time difference. Alternatively, the multiple TRPs can directly determine the timings of multiple links between the TRP and the terminal based on the position reported by the terminal or the terminal position calculated by the LMF. Additionally, after determining the n-th timing, the network side configures the terminal with the physical channel or the physical signal associated with the n-th timing. Upon receiving the configuration information, the terminal uses the n-th timing to receive or send the associated physical channel or physical signal. The received physical channel or signal mainly includes SS/PBCH block, PDCCH, PDSCH, CSI-RS, PTRS, and other downlink signals, while the sent physical channel or signal mainly includes SRS, PUSCH, and PUCCH. It should be noted that, through the method in the embodiment of the present disclosure, the network side can obtain the timing difference of two TRPs (or cells with two different timings) and schedule accordingly, so as to ensure that the timing difference is less than the CP, or ensure a correct signal transmission when the timing difference is greater than the CP.

The technical solutions provided by the embodiments of the present disclosure can be applied to a variety of systems, especially the 5G system. For example, an applicable system may be a Global System of Mobile communication (GSM) system, a Code Division Multiple Access (CDMA) system, a Wideband Code Division Multiple Access (WCDMA), a General Packet Radio Service (GPRS) system, a Long Term Evolution (LTE) system, a LTE Frequency Division Duplex (FDD) system, a LTE Time Division Duplex (TDD) system, a Long Term Evolution Advanced (LTE-A) system, a Universal Mobile Telecommunication System (UMTS), a Worldwide interoperability for Microwave access (WiMAX) system, a fifth Generation mobile communication (5th-Generation, 5G) New Radio (NR) system, etc. These various systems each includes a terminal device and a network device. The system can also include a core network part, such as an evolved packet system (EPS), a 5G System (5GS), etc.

The terminal involved in the embodiments of the present disclosure may be a device that provides voice and/or data connectivity to the user, a handheld device with a wireless connection function, or another processing device connected to a wireless modem, etc. In different systems, the names of terminal device may also be different. For example, in a 5G system, the terminal device may be called a User Equipment (UE). A wireless terminal device can communicate with one or more Core Networks (CNs) via a Radio Access Network (RAN). The wireless terminal device can be a mobile terminal device, such as a mobile phone (also known as a "cell phone") and a computer with a mobile terminal device, which may be, for example, a portable, pocket-sized, handheld, computer-built-in or vehicle-mounted mobile device, which exchange audio and/or data with a radio access network. For example, it may be a Personal Communication Service (PCS) phone, a cordless phone, a Session Initiated Protocol (SIP) phone, a Wireless Local Loop (WLL) station, a Personal Digital Assistant (PDA) or another device. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present disclosure.

The network device involved in the embodiments of the present disclosure may be a base station, and the base station may include multiple cells that provide services to terminals. Depending on the specific application, a base station can also be called as an access point, or it can be a device in the access network that communicates with a wireless terminal device through one or more sectors on the air interface, or it can be named by another name. A network device can be used to exchange received radio frames with Internet Protocol (IP) packets and act as a router between the wireless terminal device and the rest of the access network, wherein the rest of the access network can include the IP communications network. The network device may also coordinate attribute management of the air interface. For example, the network device involved in the embodiments of the present disclosure may be a network device (Base Transceiver Station, BTS) in Global System for Mobile communications (GSM) or Code Division Multiple Access (CDMA), or it can be a network device (NodeB) in a Wide-band Code Division Multiple Access (WCDMA), or an evolved Node B (eNB or e-NodeB) in a Long Term Evolution (LTE) system, a 5G base station (gNB) in a 5G network architecture (next generation system), or a Home evolved base station (Home evolved Node B, HeNB), a relay node, a femto, a pico, etc., which are not limited in the embodiments of the present disclosure. In some network structures, the network device may include a Centralized Unit (CU) node and Distributed Unit (DU) nodes, and the centralized unit and distributed units may also be geographically separately.

The network device and the terminal device may each perform Multi-Input Multi-Output (MIMO) transmission with each other by using one or more antennas. The MIMO transmission may be a Single User MIMO (SU-MIMO) transmission or a Multiple User MIMO (MU-MIMO) transmission. According to the configuration and quantity of antenna combinations, the MIMO transmission may be a two Dimensional-MIMO (2D-MIMO) transmission, a three Dimensional-MIMO (3D-MIMO) transmission, a Full Dimensional-MIMO (FD-MIMO) transmission or a massive-MIMO transmission, and may also be a diversity transmission, a pre-coded transmission, a beam forming transmission, or the like.

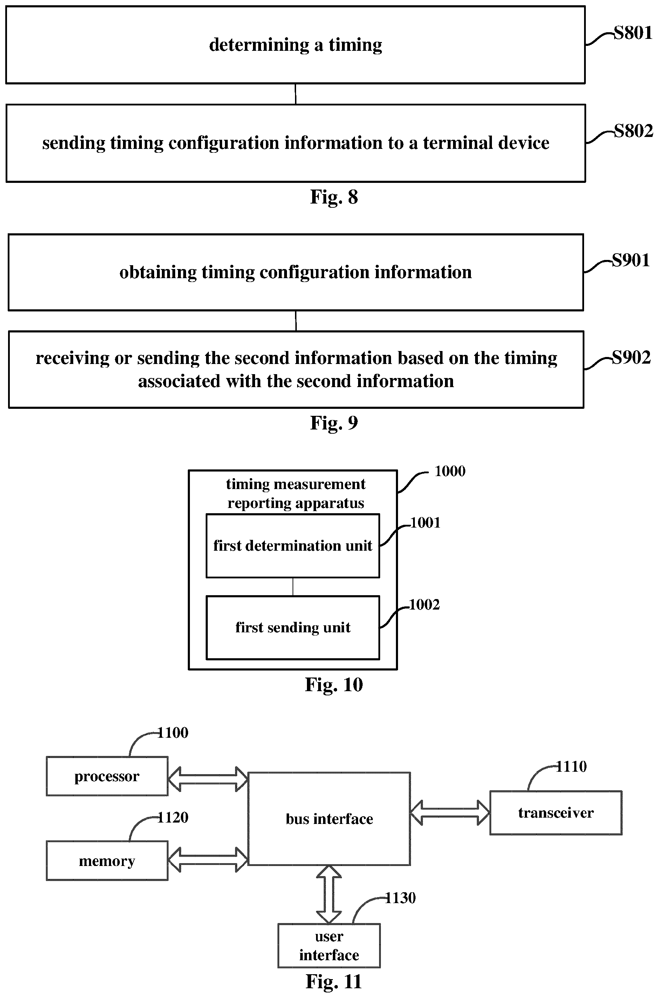

Regarding the implementation on the terminal device side, as shown in Fig. 8, an embodiment of the present disclosure provides a timing configuration method, executed by network device, including:

Step S801, determining a timing;
Step S802, sending timing configuration information to a terminal device;
wherein the timing configuration information includes a relationship between the timing and second information;
wherein the second information includes at least one of the followings:

a physical channel; or
a signal.

Optionally, the timing includes at least one of the followings:

a downlink timing;
an uplink timing; or
an uplink timing advance.

Optionally, the determining the timing includes at least one of the followings:

determining the timing based on a chronological order of timings;
determining the timing based on the chronological order of timings under a number corresponding to a same third information, wherein the third information includes a radio frame, a slot, or a symbol;
determining the timing based on a predefined manner;
determining the timing based on a network side configuration;
determining different timings based on reception timings of uplink signals;
determining different timings based on a current timing;
determining different timings based on a transmission configuration indication or a spatial relationship;
determining different timings based on a value of the Timing Advance (TA);
determining different timings based on a parameter configured by a high layer; or
determining timing based on timing information reported by the terminal.

Optionally, the parameter configured by a high layer includes CORESETPoolIndex.

Optionally, before the determining the timing, the method further includes:

receiving an uplink signal sent by the terminal device; or
receiving timing information sent by the terminal device, wherein the terminal device measures a timing of at least one first signal to determine the timing information, the first signal corresponds to at least one piece of first information, and/or, one piece of first information corresponds to one or more first signals; and the first information including a resource or a high layer parameter.

It should be noted that, through the method in the embodiment of the present disclosure, the network side can obtain the timing difference of two TRPs (or cells with two different timings) and schedule accordingly to ensure the timing difference is less than the CP, or ensure the correct signal transmission when the timing difference is greater than the CP.

It should be noted that all descriptions about the network device side in the above embodiments are applicable to the embodiment of the timing configuration method applied to the network device side, which a same technical effect.

Corresponding to the implementation on the network device side, as shown in Fig. 9, an embodiment of the present disclosure provides an information transmission method, executed by the terminal device, including:

Step S901, obtaining timing configuration information, wherein the timing configuration information includes a relationship between the timing and second information;
Step S902, receiving or sending the second information based on the timing associated with the second information;
wherein the second information includes at least one of the followings:

a physical channel; or
a signal.

Optionally, the timing includes at least one of the followings:

a downlink timing;
an uplink timing; or
an uplink timing advance.

Optionally, obtaining the timing configuration information includes one of the followings:

receiving the timing configuration information sent by a network device;
determining the timing configuration information based on a predefined manner.

Optionally, the relationship between the timing and the second information is determined by at least one of the followings:

determining the relationship between the timing and the second information based on a chronological order of timings;
determining the relationship between the timing and the second information based on the chronological order of timings under a number corresponding to a same third information, wherein the third information includes a radio frame, a slot, or a symbol;
determining the relationship between the timing and the second information based on a predefined manner;
determining the relationship between the timing and the second information based on a network side configuration;
determining the relationship between the timing and the second information based on a reception timing of an uplink signal;
determining the relationship between the timing and the second information based on a current timing;
determining the relationship between the timing and the second information based on a transmission configuration indication or spatial relationship;
determining the relationship between the timing and the second information based on a value of the Timing Advance (TA); or
determining the relationship between the timing and the second information based on a parameter configured by a high layer.

It should be noted that, for the downlink transmission, the terminal determines the timing configuration information based on the network side configuration or a predefined manner, and receives the corresponding second information based on the relationship between the second information and the downlink reception timing in the timing configuration information. For example, if the network side configures PDCCH1, PDSCH1, and CSI-RS1 associated with the first timing, and PDCCH2, PDSCH2, and CSI-RS2 associated with the second timing, the terminal may use the reception timing corresponding to the first timing to decode PDCCH1, PDSCH1, and CSI-RS1, and use the reception timing corresponding to the second timing to decode PDCCH2, PDSCH2, and CSI-RS2. Similarly, the terminal determines the relationship between the second information and the downlink reception timing based on a predefined manner. For example, the terminal may determine different timings based on transmission configuration indication or spatial relationship. If two TCI states indicated by DCI or MAC-CE signaling correspond to different timings, the first TCI state corresponds to the first one of the timings (i.e., the first timing) and the second TCI state corresponds to the second one of the timings (i.e., the second timing), then the terminal uses the first timing to decode a channel or a signal corresponding to the first TCI state, and uses the second timing to decode a channel or a signal corresponding to the second TCI state. This method applies to all physical channels or signals indicated by a same TCI state indication signaling, and is also applicable to different physical channels or signals indicated by multiple TCI state indication signalings.

The same applies to the uplink transmission. The terminal determines the relationship between the uplink timing and the physical channel or physical signal based on the network side configuration or the predefined manner. The uplink timing can be in the form of TA, for example, one cell or multiple cells containing multiple TRPs corresponds to two TA values, each TA value corresponds to a set of channels or signals (e.g., TA1 corresponds to PUCCH1, PUSCH1, or SRS1, and TA2 corresponds to PUCCH2, PUSCH2, or SRS2), then the terminal uses the corresponding TA1 to send PUCCH1, PUSCH1, or SRS1, and uses TA2 to send PUCCH2, PUSCH2, or SRS2. The relationship between the TA value and the physical channel or physical signal can be established through a TCI state or a spatial relationship, i.e., TA1 is associated with TCI1 (or spatial relationship 1), and TA2 is associated with TCI2 (or spatial relationship 2). Thus, the terminal uses the corresponding TA to send the physical channel or physical signal corresponding to its associated TCI state (or spatial relationship).

When the terminal determines the timing based on the network side configuration, the timing configuration information can be configured in the setting of the physical channel or physical signal, such as configuring the corresponding timing number or other timing information in the high layer parameters PDCCH-config, PDSCH-config, PUSCH-config, or PUCCH-config.

When the terminal determines the timing based on a predefined manner, it can also combine other indications from the network side (such as uplink TA indications) to jointly determine the timing corresponding to the physical channel or physical signal. For example, the relationship between the TA and the physical channel can be indirectly established through the relationship between the TA and the TCI state, the spatial relationship, or the high layer parameter CORESETPoolIndex, that is, both the TA and the physical channel or physical signal are related to the same TCI state, the spatial relationship, or the high layer parameter CORESETPoolIndex, then it is considered that the TA is associated with the physical channel or physical signal. For example, if the terminal determines that PUCCH1, PUSCH1, or SRS 1 corresponds to the first TA (e.g., TA1), and PUCCH2, PUSCH2, or SRS2 corresponds to the second TA (e.g., TA2), and the network side configures the values of the two TAs through a TA command, then the terminal uses the TA1 value indicated by the network side to send PUCCH1, PUSCH1, or SRS1, and uses the TA2 value indicated by the network side to send PUCCH2, PUSCH2, or SRS2.

It should be noted that all descriptions regarding the terminal device side in the above the embodiments are applicable to the embodiment of the information transmission method applied to the terminal device side, and can achieve the same technical effect.

As shown in Fig. 10, an embodiment of the present disclosure provides a timing measurement reporting apparatus 1000, applied to the terminal device, and includes:

a first determination unit 1001, configured to perform timing measurement on at least one received first signal to determine timing information;
a first sending unit 1002, configured to send the timing information to a network device;
wherein the first signal corresponds to at least one piece of first information, and/or, one piece of first information corresponds to one or more first signals, and the first information includes a resource or a high layer parameter.

Optionally, the first signal includes at least one of the followings:

a synchronization signal;
a synchronization signal and a physical broadcast channel block;
a Tracking Reference Signal (TRS);
a Positioning Reference Signal (PRS); or
a Channel State Information Reference Signal (CSI-RS).

Optionally, a determination of the first signal includes at least one of the followings:

that the first signal is predefined; or
that the first signal is configured by a network device.

Optionally, in the case that the first signal is configured by the network device, the apparatus further includes:

> a first receiving unit, configured to receive at least one signal set configured by the network device; wherein each of the at least one signal set including at least one first signal.

Optionally, the first sending unit 1002 is configured to implement at least one of the followings:

> sending the timing information to the network device during a Channel State Information (CSI) reporting process;
> sending the timing information to the network device during an information transmission process other than the CSI reporting process;
> sending the timing information to the network device when a timing reporting condition is met;
> sending the timing information to the network device through Radio Resource Control (RRC) signaling.

Optionally, in the case that sending the timing information to the network device when a timing reporting condition is met, the first sending unit 1002 is used to implement:

> sending the timing information to the network device through first signaling;
> wherein the first signaling includes at least one of the followings:
>
> > Uplink Control Information (UCI);
> > a Media Access Control Control Element (MAC CE);
> > a Random Access CHannel (RACH);
> > beam failure recovery information; or
> > Maximum Permissible Exposure (MPE) reporting information.

Optionally, the timing information is represented by at least one of the followings:

> a time difference;
> a timing number; or
> a relationship with an operation timing.

Optionally, the time difference is represented by at least one of the followings:

> the time difference between a measured timing and the operation timing;
> the time difference between first signals corresponding to different first information respectively; or
> the time difference of receiving at least one first signal.

Optionally, the timing number is represented by at least one of the followings:

> a relationship between the timing number and the first information;
> a relationship between the timing number and the at least one first signal or between the timing number and the at least one signal set, wherein each of the at least one signal set including at least one first signal; or
> the operation timing and a timing other than the operation timing.

Optionally, the relationship between the timing number and the first information is represented by at least one of the followings:

> a correspondence between the timing number and the resource;
> a correspondence between the timing number and a control resource set pool index; or
> a correspondence between the timing number and a physical cell identity.

Optionally, the timing information reporting includes at least one of the followings:

> carrying timing reporting information related to CSI;
> carrying CSI related to the timing information; or
> carrying a Channel state information reference signal Resource Indicator (CRI) corresponding to the timing information, or, a Synchronization Signal and Broadcast channel block Resource Indicator (SSBRI).

Optionally, the apparatus further includes:

> a third sending unit, configured to send a measurement condition to a network device;
> wherein the measurement condition includes one of the followings:
>
> > that timing information is related to the beam; or
> > that timing information is not related to the beam.

Optionally, after the first sending unit 1002 sends the timing information to the network device, it further includes:

> a second receiving unit, configured to receive timing configuration information sent by the network device, wherein the timing configuration information includes: the relationship between the timing and the second information;
> a second transmission unit, configured to receive or send the second information based on the timing associated with the second information;
> wherein the second information includes at least one of the followings:

a physical channel; or
a signal.

It should be noted that the terminal device embodiments corresponds to the aforementioned method embodiments, respectively. All implementations in the aforementioned method embodiments are applicable to the terminal device embodiments and can achieve the same technical effect.

It should be noted that the division of units in the embodiments of the present disclosure is schematic and is only a logical function division. In actual implementation, there may be other division methods. In addition, each functional unit in various embodiments of the present disclosure may be integrated into one processing unit, or each unit may exist physically alone, or two or more units may be integrated into one unit. The above integrated units can be implemented in the form of hardware or software functional units.

If the integrated unit is implemented in the form of a software functional unit and sold or used as an independent product, it may be stored in a processor-readable storage medium. Based on such understanding, essential parts, or parts contributing to the related art, of the technical solution of the present disclosure may be implemented in a form of a software product. The computer software product is stored in a storage medium, and includes instructions to cause a computer device (which can be a personal computer, a server, or a network device, etc.) or a processor to execute all or part of the steps of the methods described in various embodiments of the present disclosure. The aforementioned storage medium includes: a USB flash disk, a removable hard disk, a Read-Only Memory (ROM), a Random Access Memory (RAM), a magnetic disk or an optical disk, or another medium that can store program code.

As shown in Figure 11, an embodiment of the present disclosure provides a terminal device, including a processor 1100, transceiver 1110, memory 1120, and a program stored in the memory 1120 and executable by the processor 1100; wherein the transceiver 1110 is connected to the processor 1100 and memory 1120 via a bus interface. The processor 1100 is configured to read the program in the memory and perform the following operations:

performing a timing measurement on the at least one received first signal to determine timing information;
sending the timing information to a network device through the transceiver 1110;
wherein the first signal corresponds to at least one piece of first information, and/or, one piece of first information corresponds to one or more first signals, and the first information includes a resource or a high layer parameter;
the transceiver 1110 is configured to receive and send data under the control of the processor 1100.

In Fig. 11, the bus architecture may include any number of interconnected buses and bridges, and connects various circuits including one or more processors represented by the processor 1100 and the memory represented by the memory 1120. The bus architecture can also link together various other circuits such as peripherals, voltage regulators, and power management circuits, which are known in the art and therefore will not be described further herein. The bus interface provides the interface. The transceiver 1110 may be a plurality of elements, including a transmitter and a receiver, to allow for communication with various other apparatuses on the transmission medium. The transmission medium includes a wireless channel, a wired channel, an optical cable, and another transmission medium. For different user equipments, the user interface 1130 can also be an interface capable of externally or internally connecting a required device. The connected device includes but is not limited to a keypad, a display, a speaker, a microphone, a joystick, etc.

The processor 1100 is responsible for managing the bus architecture and general processing, and the memory 1120 can store data used by the processor 1100 when performing operations.

Optionally, the processor 1100 may be a Central Processing Unit (CPU), an Application Specific Integrated Circuit (ASIC), a Field Programmable Gate Array (FPGA) or a Complex Programmable Logic Device (CPLD). The processor can also adopt a multi-core architecture.

By calling the computer program stored in the memory, the processor is configured to perform any of the methods provided in the embodiments of the present disclosure according to the acquired executable instructions. The processor and the memory can also be physically separated.

Further, the first signal includes at least one of the followings:

a synchronization signal;
a synchronization signal and a physical broadcast channel block;
a Tracking Reference Signal (TRS);
a Positioning Reference Signal (PRS); or
a Channel State Information Reference Signal (CSI-RS).

Furthermore, a determination of the first signal includes at least one of the followings:

that the first signal is predefined; or
that the first signal is configured by the network device.

Additionally, in the case that the first signal is configured by the network device, further including:

receiving at least one signal set configured by the network device;
wherein each of the at least one signal set includes at least one first signal.

Furthermore, sending the timing information to the network device includes at least one of followings:

sending the timing information to the network device during a Channel State Information (CSI) reporting process;
sending the timing information to the network device during an information transmission process other than the CSI reporting process;
sending the timing information to the network device when a timing reporting condition is met;
sending the timing information to the network device through Radio Resource Control (RRC) signaling.

Furthermore, in the case that sending the timing information to the network device when the timing reporting condition is met, the processor 1100 is configured to read the computer program in the memory and perform the following operations:

sending, by the transceiver 1110, the timing information to the network device through first signaling;
wherein the first signaling includes at least one of the followings:

Uplink Control Information (UCI);
a Media Access Control Control Element (MAC CE);
a Random Access CHannel (RACH);
beam failure recovery information; or
Maximum Permissible Exposure (MPE) reporting information.

Furthermore, the timing information is represented by at least one of the followings:

a time difference;
a timing number; or
a relationship with an operation timing.

Furthermore, the time difference is represented by at least one of the followings:

the time difference between a measured timing and the operation timing;
the time difference between first signals corresponding to different first information respectively; or
the time difference of receiving at least one first signal.

Furthermore, the timing number is represented by at least one of the followings:

a relationship between the timing number and the first information;
a relationship between the timing number and the at least one first signal or between the timing number and the at least one signal set, wherein each of the at least one signal set including at least one first signal; or
the operation timing and a timing other than the operation timing.

Furthermore, the relationship between the timing number and the first information is represented by at least one of the followings:

a correspondence between the timing number and the resource;
a correspondence between the timing number and a control resource set pool index; or
a correspondence between the timing number and a physical cell identity.

Furthermore, the timing information reporting includes at least one of the followings:

carrying timing reporting information related to CSI;
carrying CSI related to the timing information; or
carrying a Channel state information reference signal Resource Indicator (CRI) corresponding to the timing information, or, a Synchronization Signal and Broadcast channel block Resource Indicator (SSBRI).

Furthermore, the processor 1100 is configured to read the computer program in the memory and perform the following operations:

sending, by the transceiver 1110, a measurement condition to the network device;
wherein the measurement condition includes one of the followings:

that timing information is related to the beam; or
that timing information is not related to the beam.

Furthermore, the processor 1100 is configured to read the computer program in the memory and perform the following operations:

receiving, by the transceiver 1110, timing configuration information sent by the network device, wherein the timing configuration information includes a relationship between the timing and second information;
receiving or sending, by the transceiver 1110, the second information based on the timing related to the second information;
wherein the second information includes at least one of the followings:

a physical channel; or

a signal.

It should be noted here that the above-mentioned terminal device provided by the embodiments of the present disclosure can implement all the method steps implemented by the above-mentioned method embodiments, and can achieve the same technical effect. The parts and beneficial effects of the embodiments that are the same as the method embodiments will not be further described in details herein.

An embodiment of the present disclosure further provides a computer-readable storage medium. The computer-readable storage medium stores a computer program. The computer program is used to cause the processor to execute the steps of the timing measurement reporting method applied to the terminal device. The processor-readable storage medium may be any available medium or data storage device that the processor can access, including but not limited to a magnetic storage (such as a floppy disk, a hard disk, a magnetic tape, a Magneto-Optical (MO) disk), an optical storage (such as CD, DVD, BD, HVD), and a semiconductor memory (such as a ROM, an EPROM, an EEPROM, an Non-Volatile memory (NAND FLASH), a Solid State Drive (SSD)), etc.

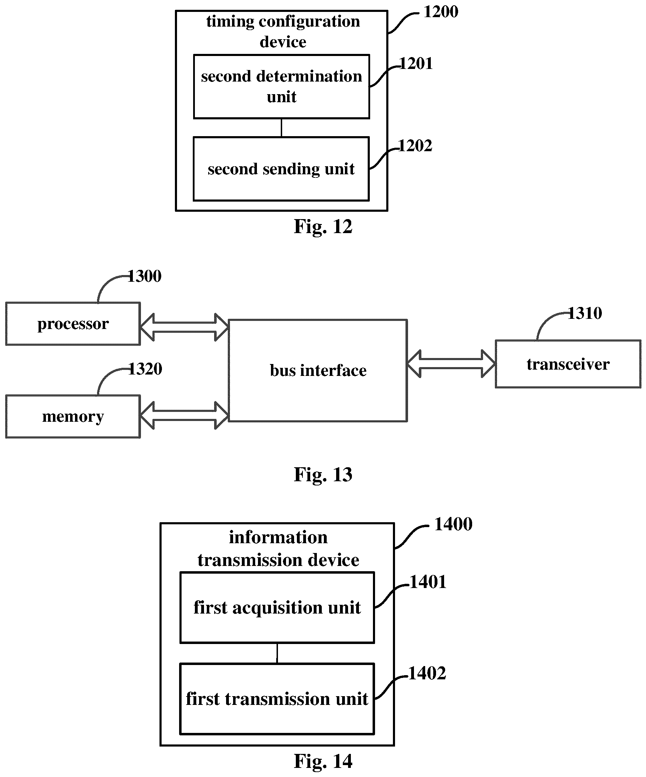

As shown in Fig. 12, an embodiment of the present disclosure provides a timing configuration device 1200, applied to a network device, including:

a second determination unit 1201, configured to determine timing information;
a second sending unit 1202, configured to send timing configuration information to a terminal device; wherein the timing configuration information includes a relationship between the timing and second information;
wherein the second information includes at least one of the followings:

a physical channel; or
a signal.

Optionally, the timing includes at least one of the followings:

a downlink timing;
an uplink timing; or
an uplink timing advance.

Optionally, the second determination unit 1201 is configured to implement at least one of the followings:

determining the timing based on a chronological order of timings;
determining the timing based on the chronological order of timings under a number corresponding to a same third information, wherein the third information includes a radio frame, a slot, or a symbol;

determining the timing based on a predefined manner;
determining the timing based on a network side configuration;
determining different timings based on reception timings of uplink signals;
determining different timings based on a current timing;
determining different timings based on a transmission configuration indication or a spatial relationship;
determining different timings based on a value of the Timing Advance (TA);
determining different timings based on a parameter configured by a high layer.

Optionally, the parameter configured by a high layer includes CORESETPoolIndex.

Optionally, before the second determination unit 1201 determines the timing, the apparatus further includes:

a third receiving unit, configured to receive an uplink signal sent by the terminal device; or
receiving timing information sent by the terminal device, wherein the terminal device measures a timing of at least one first signal to determine the timing information, the first signal corresponds to at least one piece of first information, and/or, one piece of first information corresponds to one or more first signals; and the first information including a resource or a high layer parameter.

It should be noted that the network device embodiments correspond to the aforementioned method embodiments, respectively. All implementations in the aforementioned method embodiments are applicable to the network device embodiments and can achieve the same technical effect

It should be noted that the division of units in the embodiments of the present disclosure is schematic and is only a logical function division. In actual implementation, there may be other division methods. In addition, each functional unit in various embodiments of the present disclosure may be integrated into one processing unit, or each unit may exist physically alone, or two or more units may be integrated into one unit. The above integrated units can be implemented in the form of hardware or software functional units.

If the integrated unit is implemented in the form of a software functional unit and sold or used as an independent product, it may be stored in a processor-readable storage medium. Based on such an understanding, essential parts, or parts contributing to the related art, of the technical solution of the present disclosure may be implemented in a form of a software product. The computer software product is stored in a storage medium, and includes several instructions to cause a computer device (which can be a personal computer, a server, or a network device, etc.) or a processor to execute all or part of the steps of the methods described in various embodiments of the present disclosure. The aforementioned storage medium include: USB flash disk, removable hard disk, Read-Only Memory (ROM), Random Access Memory (RAM), magnetic disk or optical disk and other medium that can store program code.

As shown in Fig. 13, an embodiment of the present disclosure further provides a network device, including a processor 1300, a transceiver 1310, a memory 1320, and a program stored in the memory 1320 and executable by the processor 1300; wherein, transceiver 1310 is connected to the processor 1300 and the memory 1320 via a bus interface. The processor 1300 is configured to read the program in the memory and perform the following operations:

determining a timing;
sending, by transceiver 1310, timing configuration information to a terminal device;
wherein the timing configuration information includes a relationship between the timing and second information;
wherein the second information includes at least one of the followings:

a physical channel; or
a signal.

The transceiver 1310 is configured to receive and send data under the control of the processor 1300.
In Fig. 13, the bus architecture may include any number of interconnected buses and bridges, and connects various circuits including one or more processors represented by the processor 1300 and the memory represented by the memory 1320. The bus architecture can also link together various other circuits such as peripherals, voltage regulators, and power management circuits, which are known in the art and therefore will not be described further herein. The bus interface provides the interface. The transceiver 1310 may be a plurality of elements, including a transmitter and a receiver, to allow for communication with various other apparatuses on the transmission medium. The transmission medium includes wireless channels, wired channels, optical cables, and other transmission medium. The processor 1300 is responsible for managing the bus architecture and general processing, and the memory 1320 can store data used by the processor 1300 when performing operations.
The processor 1300 may be a Central Processing Unit (CPU), an Application Specific Integrated Circuit (ASIC), a Field Programmable Gate Array (FPGA) or Complex Programmable Logic Device (CPLD). The processor can also adopt a multi-core architecture.
Optionally, the timing includes at least one of the followings:

a downlink timing;
an uplink timing; or
an uplink timing advance.

Furthermore, the processor is configured to read the computer program in the memory and perform at least one of the following operations:

determining the timing based on a chronological order of timings;
determining the timing based on the chronological order of timings under a number corresponding to a same third information, wherein the third information includes a radio frame, a slot, or a symbol;
determining the timing based on a predefined manner;
determining the timing based on a network side configuration;
determining different timings based on reception timings of uplink signals;
determining different timings based on a current timing;
determining different timings based on a transmission configuration indication or a spatial relationship;
determining different timings based on a value of the Timing Advance (TA);
determining different timings based on a parameter configured by a high layer.

Optionally, the parameter configured by a high layer includes CORESETPoolIndex.
Furthermore, the processor is configured to read the computer program in the memory and perform the following operations:

receiving, by the transceiver 1310, an uplink signal sent by the terminal device; or
receiving, by the transceiver 1310, timing information sent by the terminal device, wherein the terminal device measures a timing of at least one first signal to determine the timing information, the first signal corresponds to at least one piece of first information, and/or, one piece of first information corresponds to one or more first signals; and the first information including a resource or a high layer parameter.

It should be noted here that the above-mentioned network device provided by the embodiments of the present disclosure can implement all the method steps implemented by the above-mentioned method embodiments, and can achieve the same technical effect. The parts and beneficial effects of the embodiments that are the same as the method embodiments will no longer be described in detail.
An embodiment of the present disclosure further provides a computer-readable storage medium. The computer-readable storage medium stores a computer program. The computer program is used to cause the processor to execute the steps of the timing measurement reporting method applied to the network device. The processor-readable storage medium may be any available medium or data storage device that the processor can access, including but not limited to magnetic storage (such as floppy disks, hard disks, magnetic tapes, Magneto-Optical disks (MO)), optical storage (such as CD, DVD, BD, HVD), and semiconductor memories (such as ROM, EPROM, EEPROM, non-volatile memory (NAND FLASH), Solid State Drive (SSD)), etc.

As shown in Fig. 14, an embodiment of the present disclosure provides an information transmission device 1400, applied to terminal device, including:

a first acquisition unit 1401, configured to obtain timing configuration information, wherein the timing configuration information includes: a relationship between a timing and second information;
a first transmission unit 1402, configured to receive or send the second information based on the timing associated with the second information;
wherein the second information includes at least one of the followings:

a physical channel; or
a signal.

Optionally, the timing includes at least one of the followings:

a downlink timing;
an uplink timing; or
an uplink timing advance.

Optionally, the first acquisition unit 1401 is configured to implement at least one of the followings:

receiving the timing configuration information sent by a network device;
determining the timing configuration information based on a predefined manner.

Optionally, the relationship between the timing and the second information is determined by at least one of the followings:

determining the relationship between the timing and the second information based on a chronological order of timings;
determining the relationship between the timing and the second information based on the chronological order of timings under a number corresponding to a same third information, wherein the third information includes a radio frame, a slot, or a symbol;
determining the relationship between the timing and the second information based on a predefined manner;
determining the relationship between the timing and the second information based on a network side configuration;
determining the relationship between the timing and the second information based on a reception timing of an uplink signal;
determining the relationship between the timing and the second information based on a current timing;
determining the relationship between the timing and the second information based on a transmission configuration indication or spatial relationship;
determining the relationship between the timing and the second information based on a value of the Timing Advance (TA); or
determining the relationship between the timing and the second information based on a parameter configured by a high layer.

It should be noted that the terminal device embodiment corresponds one-to-one with the aforementioned method embodiments. All implementations in the aforementioned method embodiments are applicable to the terminal device embodiment and can achieve the same technical effect.

It should be noted that the division of units in the embodiments of the present disclosure is schematic and is only a logical function division. In actual implementation, there may be other division methods. In addition, each functional unit in various embodiments of the present disclosure may be integrated into one processing unit, or each unit may exist physically alone, or two or more units may be integrated into one unit. The above integrated units can be implemented in the form of hardware or software functional units.

If the integrated unit is implemented in the form of a software functional unit and sold or used as an independent product, it may be stored in a processor-readable storage medium. Based on such an understanding, essential parts, or parts contributing to the related art, of the technical solution of the present disclosure may be implemented in a form of a software product. The computer software product is stored in a storage medium, and includes several instructions to cause a computer device (which can be a personal computer, a server, or a network device, etc.) or a processor to execute all or part of the steps of the methods described in various embodiments of the present disclosure. The aforementioned storage medium include: a USB flash disk, a removable hard disk, a Read-Only Memory (ROM), a Random Access Memory (RAM), a magnetic disk, an optical disk, or another medium that can store program code.

Optionally, an embodiment of the present disclosure further provides a terminal device. The structure of this terminal device is shown in Fig. 11.

The processor is configured to read the computer program in the memory and perform the following operations:

receiving, by the transceiver, timing configuration information sent by the network device, wherein the timing configuration information includes a relationship between the timing and second information; receiving or sending, by the transceiver, the second information based on the timing related to the second information; wherein the second information includes at least one of the followings:

> a physical channel; or
> a signal.

Optionally, the timing includes at least one of the followings:

> a downlink timing;
> an uplink timing; or
> an uplink timing advance.

Optionally, the processor is configured to read the computer program in the memory and perform one of the following operations:

> receiving, by the transceiver, the timing configuration information sent by a network device;
> determining the timing configuration information based on a predefined manner.

Optionally, the processor is configured to read the computer program in the memory and perform at least one of the following operations:

> determining the relationship between the timing and the second information based on a chronological order of timings;
> determining the relationship between the timing and the second information based on the chronological order of timings under a number corresponding to a same third information, wherein the third information includes a radio frame, a slot, or a symbol;
> determining the relationship between the timing and the second information based on a predefined manner;
> determining the relationship between the timing and the second information based on a network side configuration;
> determining the relationship between the timing and the second information based on a reception timing of an uplink signal;
> determining the relationship between the timing and the second information based on a current timing;
> determining the relationship between the timing and the second information based on a transmission configuration indication or spatial relationship;
> determining the relationship between the timing and the second information based on a value of the Timing Advance (TA); or

determining the relationship between the timing and the second information based on a parameter configured by a high layer.

An embodiment of the present disclosure further provides a computer-readable storage medium. The computer-readable storage medium stores a computer program. The computer program is used to cause the processor to execute the steps of the timing measurement reporting method applied to the terminal device. The processor-readable storage medium may be any available medium or data storage device that the processor can access, including but not limited to a magnetic storage (such as a floppy disk, a hard disk, a magnetic tape, a Magneto-Optical (MO) disk), an optical storage (such as CD, DVD, BD, HVD), or a semiconductor memories (such as a ROM, an EPROM, an EEPROM, a non-volatile memory (NAND FLASH), a Solid State Drive (SSD)), etc.

Those skilled in the art will appreciate that embodiments of the present disclosure may be provided as methods, systems, or computer program products. Accordingly, the present disclosure may take the form of an entirely hardware embodiment, an entirely software embodiment, or an embodiment that combines software and hardware aspects. Furthermore, the present disclosure may take the form of a computer program product embodied on one or more computer-usable storage medium (including, but not limited to, a magnetic disk storage, an optical storage, and the like) including computer-usable program codes.

The present disclosure has been described with reference to flow diagrams and/or block diagrams of methods, devices (systems), and computer program products according to embodiments of the present disclosure. It will be understood that each flow and/or block of the flow diagrams and/or block diagrams, and combinations of flows and/or blocks in the flow diagrams and/or block diagrams, can be implemented by computer executable instructions. These computer executable instructions may be provided to a processor of a general purpose computer, special purpose computer, embedded processor, or other programmable data processing device to produce a machine, such that the instructions, which are executed via the processor of the computer or other programmable data processing device, create means for implementing the functions specified in the flow diagram flow or flows and/or block diagram block or blocks.

These processor executable instructions may also be stored in a processor-readable storage that can direct a computer or other programmable data processing device to function in a particular manner, such that the instructions stored in the processor-readable storage produce an article of manufacture including instruction means which implement the function specified in the flow diagram flow or flows and/or block diagram block or blocks.

The processor executable instructions may also be loaded onto a computer or other programmable data processing device to cause a series of operational steps to be performed on the computer or other programmable device to produce a computer-implemented process, such that the instructions which are executed on the computer or other programmable device provide steps for implementing the functions specified in the flow diagram flow or flows and/or block diagram block or blocks.

It should be understood that the division of each module above is only a division of logical functions. In actual implementation, it can be fully or partially integrated into one physical entity, or it can also be physically separated. These modules can all be implemented in the form of software called by processing elements; they can also all be implemented in the form of hardware; or some modules can be implemented in the form of software called by processing elements, and some modules can be implemented in the form of hardware. For example, a determination module can be a separate processing element, or it can be integrated and implemented in a chip of the above-mentioned device. In addition, it can also be stored in the memory of the above-mentioned apparatus in the form of program codes, and called by a processing element of the above-mentioned apparatus to execute the functions of the determination modules identified above. The implementation of other modules is similar. In addition, all or part of these modules can be integrated together or implemented independently. The processing element described herein may be an integrated circuit with signal processing capabilities. During the implementation process, each step of the above method or each of the above modules can be accomplished by integrated logic circuits in the form of hardware or instructions in the form of software in the processor element.

For example, each module, unit, sub-unit or sub-module may be one or more integrated circuits configured to implement the above method, such as: one or more Application Specific Integrated Circuits (ASICs), or, one or more microprocessors (Digital Signal Processor, DSP), or one or more Field Programmable Gate Arrays (FPGAs). For another example, when one of the above modules is implemented in the form of a processing element calling program codes, the processing element can be a general-purpose processor, such as a Central Processing Unit (CPU) or other processors that can call the program codes. For another example, these modules can be integrated together and implemented in the form of a System-On-A-Chip (SOC).

Terms "first", "second" and the like in the specification and claims of the present disclosure are adopted not to describe a specific sequence or order but to distinguish similar objects. It should be understood that data used like this may be interchanged under a proper condition for implementation of the embodiments of the disclosure described here in a sequence apart from those shown or described here. In addition, terms "include" and "have" and any variant thereof are intended to cover nonexclusive inclusions. For example, a process, method, system, product or equipment including a series of steps or units is not limited to those steps or units which are clearly listed, but may include other steps or units which are not clearly listed or intrinsic in the process, the method, the product or the equipment. In addition, the use of "and/or" in the specification and claims indicates at least one of the connected objects, for example, A and/or B and/or C indicates the inclusion of 7 situations, namely, A alone, B alone, C alone, both A and B exist, both B and C exist, both A and C exist, and A, B, and C all exist. Similarly, the use of "at least one of A and B" in the specification and claims should be understood to mean "A alone, B alone, or both A and B exist."

Obviously, the person skilled in the art can make various changes and modifications to the present disclosure without departing from the spirit and scope of the disclosure. In this way, if these modifications and variations of the present disclosure fall within the scope of the claims of the present disclosure and equivalent thereof, the present disclosure is also intended to include these modifications and variations.

## Claims

1. A method for timing measurement reporting, comprising:

    performing timing measurement on at least one received first signal to determine timing information;
    sending the timing information to a network device;
    wherein the first signal corresponds to at least one piece of first information, and/or, one piece of first information corresponds to one or more first signals, and the first information comprises a resource or a high layer parameter.

2. The method according to claim 1, wherein the first signal comprises at least one of the followings:

    a synchronization signal;
    a synchronization signal and a physical broadcast channel block;
    a Tracking Reference Signal (TRS);
    a Positioning Reference Signal (PRS); or
    a Channel State Information Reference Signal (CSI-RS).

3. The method according to claim 1, wherein a determination of the first signal comprises at least one of the followings:

    that the first signal is predefined; or
    that the first signal is configured by a network device.

4. The method according to claim 3, wherein in the case that the first signal is configured by the network device, the method further comprises:

receiving at least one signal set configured by the network device;
wherein each of the at least one signal set comprises at least one first signal.

5. The method according to claim 1, wherein the sending the timing information to the network device comprises at least one of the followings:

sending the timing information to the network device during a Channel State Information (CSI) reporting process;
sending the timing information to the network device during an information transmission process other than the CSI reporting process;
sending the timing information to the network device when a timing reporting condition is met;
sending the timing information to the network device through Radio Resource Control (RRC) signaling.

6. The method according to claim 5, wherein in the case that sending the timing information to the network device when the timing reporting condition is met, the sending the timing information to the network device comprises at least one of the followings:

sending the timing information to the network device through first signaling;
wherein the first signaling comprises at least one of the followings:

Uplink Control Information (UCI);
a Media Access Control Control Element (MAC CE);
a Random Access CHannel (RACH);
beam failure recovery information; or
Maximum Permissible Exposure (MPE) reporting information.

7. The method according to claim 1, wherein the timing information is represented by at least one of the followings:

a time difference;
a timing number; or
a relationship with an operation timing.

8. The method according to claim 7, wherein the time difference is represented by at least one of the followings:

a time difference between a measured timing and the operation timing;
a time difference between first signals corresponding to different first information respectively; or
a time difference of receiving at least one first signal.

9. The method according to claim 7, wherein the timing number is represented by at least one of the followings:

a relationship between the timing number and the first information;
a relationship between the timing number and the at least one first signal or between the timing number and the at least one signal set, wherein each of the at least one signal set comprising at least one first signal; or
the operation timing and a timing other than the operation timing.

10. The method according to claim 9, wherein the relationship between the timing number and the first information is represented by at least one of the followings:

a correspondence between the timing number and the resource;
a correspondence between the timing number and a control resource set pool index; or
a correspondence between the timing number and a physical cell identity.

11. The method according to claim 1, wherein the timing information reporting comprises at least one of the followings:

carrying timing reporting information related to CSI;
carrying CSI related to the timing information; or
carrying a Channel state information reference signal Resource Indicator (CRI), or, a Synchronization Signal and Broadcast channel block Resource Indicator (SSBRI) corresponding to the timing information.

12. The method according to claim 1, further comprising:

sending a measurement condition to the network device;
wherein the measurement condition comprises one of the followings:

that timing information is related to the beam; or
that timing information is not related to the beam.

13. The method according to claim 1, wherein after sending the timing information to the network device, the method further comprises:

> receiving timing configuration information sent by the network device, wherein the timing configuration information comprises a relationship between the timing and second information;
> receiving or sending the second information based on the timing related to the second information;
> wherein the second information comprises at least one of the followings:
>
>> a physical channel; or
>> a signal.

14. A timing configuration method, comprising:

> determining a timing;
> sending timing configuration information to a terminal device;
> wherein the timing configuration information comprises a relationship between the timing and second information;
> wherein the second information comprises at least one of the followings:
>
>> a physical channel; or
>> a signal.

15. The method according to claim 14, wherein the timing comprises at least one of the followings:

> a downlink timing;
> an uplink timing; or
> an uplink timing advance.

16. The method according to claim 14, wherein the determining the timing comprises at least one of the followings:

> determining the timing based on a chronological order of timings;
> determining the timing based on the chronological order of timings under a number corresponding to a same third information, wherein the third information comprises a radio frame, a slot, or a symbol;
> determining the timing based on a predefined manner;
> determining the timing based on a network side configuration;
> determining different timings based on reception timings of uplink signals;
> determining different timings based on a current timing;
> determining different timings based on a transmission configuration indication or a spatial relationship;
determining different timings based on a value of the Timing Advance (TA);
determining different timings based on a parameter configured by a high layer; or
determining timing based on timing information reported by the terminal.

17. The method according to claim 16, wherein the parameter configured by a high layer comprises CORESETPoolIndex.

18. The method according to claim 14, wherein before the determining the timing, the method further comprises:

> receiving an uplink signal sent by the terminal device; or
> receiving timing information sent by the terminal device, wherein the terminal device measures a timing of at least one first signal to determine the timing information, the first signal corresponds to at least one piece of first information, and/or, one piece of first information corresponds to one or more first signals; and the first information comprising a resource or a high layer parameter.

19. An information transmission method, comprising:

> obtaining timing configuration information, wherein the timing configuration information comprises: a relationship between a timing and second information;
> receiving or sending the second information based on the timing associated with the second information;
> wherein the second information comprises at least one of the followings:
>
>> a physical channel; or
>> a signal.

20. The method according to claim 19, wherein obtaining the timing configuration information comprises one of the followings:

> receiving the timing configuration information sent by a network device;
> determining the timing configuration information based on a predefined manner.

21. The method according to claim 19 or 20, wherein the relationship between the timing and the second information is determined by at least one of the followings:

> determining the relationship between the timing and the second information based on a chronological order of timings;

determining the relationship between the timing and the second information based on the chronological order of timings under a number corresponding to a same third information, wherein the third information comprises a radio frame, a slot, or a symbol;

determining the relationship between the timing and the second information based on a predefined manner;

determining the relationship between the timing and the second information based on a network side configuration;

determining the relationship between the timing and the second information based on a reception timing of an uplink signal;

determining the relationship between the timing and the second information based on a current timing;

determining the relationship between the timing and the second information based on a transmission configuration indication or spatial relationship;

determining the relationship between the timing and the second information based on a value of the Timing Advance (TA); or

determining the relationship between the timing and the second information based on a parameter configured by a high layer.

22. A terminal device, comprising a memory, a transceiver, and a processor; the memory is configured to store a computer program; the transceiver is configured to receive and send data under the control of the processor; the processor is configured to read the computer program in the memory and perform the following operations:

performing a timing measurement on the at least one received first signal to determine timing information;

sending the timing information to a network device through the transceiver;

wherein the first signal corresponds to at least one piece of first information, and/or, one piece of first information corresponds to one or more first signals, and the first information comprises a resource or a high layer parameter.

23. The terminal device according to claim 22, wherein the first signal comprises at least one of the followings:

a synchronization signal;

a synchronization signal and a physical broadcast channel block;

a Tracking Reference Signal (TRS);

a Positioning Reference Signal (PRS); or

a Channel State Information Reference Signal (CSI-RS).

24. The terminal device according to claim 22, wherein a determination of the first signal comprises at least one of the followings:

that the first signal is predefined; or

that the first signal is configured by the network device.

25. The terminal device according to claim 24, wherein in the case that the first signal is configured by the network device, further comprising:

receiving at least one signal set configured by the network device;

wherein each of the at least one signal set comprises at least one first signal.

26. The terminal device according to claim 22, wherein sending the timing information to the network device comprises at least one of followings:

sending the timing information to the network device during a Channel State Information (CSI) reporting process;

sending the timing information to the network device during an information transmission process other than the CSI reporting process;

sending the timing information to the network device when a timing reporting condition is met;

sending the timing information to the network device through Radio Resource Control (RRC) signaling.

27. The terminal device according to claim 26, wherein in the case that sending the timing information to the network device when the timing reporting condition is met, the sending the timing information to the network device comprises at least one of the followings:

sending the timing information to the network device through first signaling;

wherein the first signaling comprises at least one of the followings:

Uplink Control Information (UCI);

a Media Access Control Control Element (MAC CE);

a Random Access CHannel (RACH);

beam failure recovery information; or

Maximum Permissible Exposure (MPE) reporting information.

28. The terminal device according to claim 22, wherein the timing information is represented by at least one of the followings:

a time difference;
a timing number; or
a relationship with an operation timing.

29. The terminal device according to claim 28, wherein the time difference is represented by at least one of the followings:

a time difference between a measured timing and the operation timing;
a time difference between first signals corresponding to different first information respectively; or
a time difference of receiving at least one first signal.

30. The terminal device according to claim 28, wherein the timing number is represented by at least one of the followings:

a relationship between the timing number and the first information;
a relationship between the timing number and the at least one first signal or between the timing number and the at least one signal set, wherein each of the at least one signal set comprising at least one first signal; or
the operation timing and a timing other than the operation timing.

31. The terminal device according to claim 30, wherein the relationship between the timing number and the first information is represented by at least one of the followings:

a correspondence between the timing number and the resource;
a correspondence between the timing number and a control resource set pool index; or
a correspondence between the timing number and a physical cell identity.

32. The terminal device according to claim 22, wherein the timing information reporting comprises at least one of the followings:

carrying timing reporting information related to CSI;
carrying CSI related to the timing information; or
carrying a Channel state information reference signal Resource Indicator (CRI) corresponding to the timing information, or, a Synchronization Signal and Broadcast channel block Resource Indicator (SSBRI).

33. The terminal device according to claim 22, further comprising:

sending a measurement condition to the network device;
wherein the measurement condition comprises one of the followings:

that timing information is related to the beam; or
that timing information is not related to the beam.

34. The terminal device according to claim 22, wherein after sending the timing information to the network device, further comprising:

receiving timing configuration information sent by the network device, wherein the timing configuration information comprises a relationship between the timing and second information;
receiving or sending the second information based on the timing related to the second information;
wherein the second information comprises at least one of the followings:

a physical channel; or
a signal.

35. A network device, comprising a memory, a transceiver, and a processor:
the memory is configured to store a computer program; the transceiver is configured to receive and send data under the control of the processor; the processor is configured to read the computer program in the memory and perform the following operations:

determining a timing;
sending timing configuration information to a terminal device;
wherein the timing configuration information comprises a relationship between the timing and second information;
wherein the second information comprises at least one of the followings:

a physical channel; or
a signal.

36. The network device according to claim 35, wherein the timing comprises at least one of the followings:

a downlink timing;
an uplink timing; or
an uplink timing advance.

37. The network device according to claim 35, wherein the determining the timing comprises at least one of the followings:

determining the timing based on a chronological order of timings;

determining the timing based on the chronological order of timings under a number corresponding to a same third information, wherein the third information comprises a radio frame, a slot, or a symbol;

determining the timing based on a predefined manner;

determining the timing based on a network side configuration;

determining different timings based on reception timings of uplink signals;

determining different timings based on a current timing;

determining different timings based on a transmission configuration indication or a spatial relationship;

determining different timings based on a value of the Timing Advance (TA);

determining different timings based on a parameter configured by a high layer; or

determining timing based on timing information reported by the terminal.

38. The network device according to claim 37, wherein the parameter configured by a high layer comprises CORESETPoolIndex.

39. The network device according to claim 35, wherein before the determining the timing, further comprising:

receiving an uplink signal sent by the terminal device; or

receiving timing information sent by the terminal device, wherein the terminal device measures a timing of at least one first signal to determine the timing information, the first signal corresponds to at least one piece of first information, and/or, one piece of first information corresponds to one or more first signals; and the first information comprising a resource or a high layer parameter.

40. A terminal device comprising a memory, a transceiver, and a processor:

the memory is configured to store a computer program; the transceiver is configured to and receive and send data under the control of the processor; the processor is configured to read the computer program in the memory and perform the following operations:

obtaining timing configuration information, wherein the timing configuration information comprises: a relationship between a timing and second information;

receiving or sending, through the transceiver, the second information based on the timing associated with the second information;

wherein the second information comprises at least one of the followings:

a physical channel; or
a signal.

41. The terminal device according to claim 40, wherein obtaining the timing configuration information comprises one of the followings:

receiving the timing configuration information sent by a network device; or

determining the timing configuration information based on a predefined manner.

42. The terminal device according to claim 40 or 41, wherein the relationship between the timing and the second information is determined by at least one of the followings:

determining the relationship between the timing and the second information based on a chronological order of timings;

determining the relationship between the timing and the second information based on the chronological order of timings under a number corresponding to a same third information, wherein the third information comprises a radio frame, a slot, or a symbol;

determining the relationship between the timing and the second information based on a predefined manner;

determining the relationship between the timing and the second information based on a network side configuration;

determining the relationship between the timing and the second information based on a reception timing of an uplink signal;

determining the relationship between the timing and the second information based on a current timing;

determining the relationship between the timing and the second information based on a transmission configuration indication or spatial relationship;

determining the relationship between the timing and the second information based on a value of the Timing Advance (TA); or

determining the relationship between the timing and the second information based on a parameter configured by a high layer.

43. A timing measurement reporting apparatus, comprising:

a first determination unit, configured to perform timing measurement on at least one received first signal to determine timing information;
a first sending unit, configured to send the timing information to a network device;
wherein the first signal corresponds to at least one piece of first information, and/or, one piece of first information corresponds to one or more first signals, and the first information comprises a resource or a high layer parameter.

44. The timing measurement reporting apparatus according to claim 43, wherein the first signal comprises at least one of the followings:

a synchronization signal;
a synchronization signal and a physical broadcast channel block;
a Tracking Reference Signal (TRS);
a Positioning Reference Signal (PRS); or
a Channel State Information Reference Signal (CSI-RS).

45. The timing measurement reporting apparatus according to claim 43, wherein a determination of the first signal comprises at least one of the followings:

that the first signal is predefined; or
that the first signal is configured by a network device.

46. The timing measurement reporting apparatus according to claim 45, wherein in the case that the first signal is configured by the network device, further comprising:

receiving at least one signal set configured by the network device;
wherein each of the at least one signal set comprises at least one first signal.

47. The timing measurement reporting apparatus according to claim 43, wherein the sending the timing information to the network device comprises at least one of the followings:

sending the timing information to the network device during a Channel State Information (CSI) reporting process;
sending the timing information to the network device during an information transmission process other than the CSI reporting process;
sending the timing information to the network device when a timing reporting condition is met;
sending the timing information to the network device through Radio Resource Control (RRC) signaling.

48. The timing measurement reporting apparatus according to claim 47, wherein in the case that sending the timing information to the network device when the timing reporting condition is met, the sending the timing information to the network device comprises at least one of the followings:

sending the timing information to the network device through first signaling;
wherein the first signaling comprises at least one of the followings:

Uplink Control Information (UCI);
a Media Access Control Control Element (MAC CE);
a Random Access CHannel (RACH);
beam failure recovery information; or
Maximum Permissible Exposure (MPE) reporting information.

49. The timing measurement reporting apparatus according to claim 43, wherein the timing information is represented by at least one of the followings:

a time difference;
a timing number; or
a relationship with an operation timing.

50. The timing measurement reporting apparatus according to claim 49, wherein the time difference is represented by at least one of the followings:

a time difference between a measured timing and the operation timing;
a time difference between first signals corresponding to different first information respectively; or
a time difference of receiving at least one first signal.

51. The timing measurement reporting apparatus according to claim 49, wherein the timing number is represented by at least one of the followings:

a relationship between the timing number and the first information;
a relationship between the timing number and the at least one first signal or between the timing number and the at least one signal set, wherein each of the at least one signal set comprising at least one first signal; or
the operation timing and a timing other than the operation timing.

52. The timing measurement reporting apparatus according to claim 51, wherein the relationship between the timing number and the first information is represented by at least one of the followings:

a correspondence between the timing number and the resource;
a correspondence between the timing number and a control resource set pool index; or
a correspondence between the timing number and a physical cell identity.

53. The timing measurement reporting apparatus according to claim 43, wherein the timing information reporting comprises at least one of the followings:

carrying timing reporting information related to CSI;
carrying CSI related to the timing information; or
carrying a Channel state information reference signal Resource Indicator (CRI) corresponding to the timing information, or, a Synchronization Signal and Broadcast channel block Resource Indicator (SSBRI).

54. The timing measurement reporting apparatus according to claim 43, further comprising:

sending a measurement condition to the network device;
wherein the measurement condition comprises one of the followings:

that timing information is related to the beam; or
that timing information is not related to the beam.

55. The timing measurement reporting apparatus according to claim 43, wherein after sending the timing information to the network device, further comprising:

receiving timing configuration information sent by the network device, wherein the timing configuration information comprises a relationship between the timing and second information;
receiving or sending the second information based on the timing related to the second information;
wherein the second information comprises at least one of the followings:

a physical channel; or
a signal.

56. A timing configuration apparatus, comprising:

a second determining unit, configured to determine a timing;

a second sending unit, configured to send timing configuration information to a terminal device;
wherein the timing configuration information comprises a relationship between the timing and second information;
wherein the second information comprises at least one of the followings:

a physical channel; or
a signal.

57. The timing configuration apparatus according to claim 56, wherein the timing comprises at least one of the followings:

a downlink timing;
an uplink timing; or
an uplink timing advance.

58. The timing configuration apparatus according to claim 56, wherein the determining the timing comprises at least one of the followings:

determining the timing based on a chronological order of timings;
determining the timing based on the chronological order of timings under a number corresponding to a same third information, wherein the third information comprises a radio frame, a slot, or a symbol;
determining the timing based on a predefined manner;
determining the timing based on a network side configuration;
determining different timings based on reception timings of uplink signals;
determining different timings based on a current timing;
determining different timings based on a transmission configuration indication or a spatial relationship;
determining different timings based on a value of the Timing Advance (TA);
determining different timings based on a parameter configured by a high layer; or
determining timing based on timing information reported by the terminal.

59. The timing configuration apparatus according to claim 58, wherein the parameter configured by a high layer comprises CORESETPoolIndex.

60. The timing configuration apparatus according to claim 56, wherein before the determining the timing, further comprising:

receiving an uplink signal sent by the terminal device; or

receiving timing information sent by the terminal device, wherein the terminal device measures a timing of at least one first signal to determine the timing information, the first signal corresponds to at least one piece of first information, and/or, one piece of first information corresponds to one or more first signals; and the first information comprising a resource or a high layer parameter.

61. An information transmission apparatus, comprising:

a first acquisition unit, configured to obtain timing configuration information, wherein the timing configuration information comprises: a relationship between a timing and second information; a first transmission unit, configured to receive or send the second information based on the timing associated with the second information; wherein the second information comprises at least one of the followings:

a physical channel; or
a signal.

62. The information transmission apparatus according to claim 61, wherein obtaining the timing configuration information comprises one of the followings:

receiving the timing configuration information sent by a network device;
determining the timing configuration information based on a predefined manner.

63. The information transmission apparatus according to claim 61 or 62, wherein the relationship between the timing and the second information is determined by at least one of the followings:

determining the relationship between the timing and the second information based on a chronological order of timings;
determining the relationship between the timing and the second information based on the chronological order of timings under a number corresponding to a same third information, wherein the third information comprises a radio frame, a slot, or a symbol;
determining the relationship between the timing and the second information based on a predefined manner;
determining the relationship between the timing and the second information based on a network side configuration;
determining the relationship between the timing and the second information based on a reception timing of an uplink signal;
determining the relationship between the timing and the second information based on a current timing;
determining the relationship between the timing and the second information based on a transmission configuration indication or spatial relationship;
determining the relationship between the timing and the second information based on a value of the Timing Advance (TA); or
determining the relationship between the timing and the second information based on a parameter configured by a high layer.

64. A processor-readable storage medium storing therein a computer program, wherein the computer program is used to cause the processor to execute the method according to any one of claims 1 to 13, or the method according to any one of claims 14 to 18, or the method according to any one of claims 19 to 21.

FFT window

TRP 1

TRP 2

**Fig. 1**

FFT window

TRP 1

TRP 2

**Fig. 2**

12

base station

11

user terminal

**Fig. 3**

performing timing measurement on at least one received first signal to determine timing information ⌐S401

sending the timing information to a network device ⌐S402

**Fig. 4**

FFT window 1

a signal received by the UE from TRP1

a signal received by the UE from TRP2

FFT window 2

**Fig. 5**

C1
TRP1

C2
TRP2

C3
TRP1

**Fig. 6**

TRP 1 | slot n | slot n+1

TRP 2 | slot n | slot n+1

**Fig. 7**

determining a timing — S801

sending timing configuration information to a terminal device — S802

Fig. 8

obtaining timing configuration information — S901

receiving or sending the second information based on the timing associated with the second information — S902

Fig. 9

1000

timing measurement reporting apparatus

first determination unit — 1001

first sending unit — 1002

Fig. 10

1100

processor

bus interface

1110

transceiver

1120

memory

1130

user interface

Fig. 11

```
                  ┌─────────────────────────┐ ╭── 1200
                  │  timing configuration   │
                  │         device          │
                  │  ┌───────────────────┐ ─┼── 1201
                  │  │ second determination │
                  │  │        unit        │ │
                  │  └───────────────────┘  │
                  │           │             │ ─── 1202
                  │  ┌───────────────────┐ ─┼──
                  │  │ second sending unit │ │
                  │  └───────────────────┘  │
                  └─────────────────────────┘
```

**Fig. 12**

```
        ╭── 1300
  ┌──────────────┐            ┌──────────────────┐                           ╭── 1310
  │  processor   │ ◄════════► │                  │              ┌──────────────────────┐
  └──────────────┘            │                  │ ◄══════════► │     transceiver      │
        ╭── 1320             │   bus interface   │              └──────────────────────┘
  ┌──────────────┐            │                  │
  │   memory     │ ◄════════► │                  │
  └──────────────┘            └──────────────────┘
```

**Fig. 13**

```
                  ┌─────────────────────────┐ ╭── 1400
                  │      information         │
                  │  transmission device    │
                  │  ┌───────────────────┐ ─┼── 1401
                  │  │ first acquisition unit │
                  │  └───────────────────┘  │
                  │           │             │ ─── 1402
                  │  ┌───────────────────┐ ─┼──
                  │  │ first transmission unit │
                  │  └───────────────────┘  │
                  └─────────────────────────┘
```

**Fig. 14**

## INTERNATIONAL SEARCH REPORT

| International application No. |
| --- |
| **PCT/CN2022/137944** |

**A. CLASSIFICATION OF SUBJECT MATTER**

H04W24/02(2009.01)i;H04L5/00(2006.01)i

According to International Patent Classification (IPC) or to both national classification and IPC

**B. FIELDS SEARCHED**

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

CNTXT, ENTXT, 3GPP, CNKI: 用户设备, 测量, 报告, 上报, 定时, 差, 提前, 同步, 干扰, TRP, UE, report, measurement, timing, TA, difference, synchronization

**C. DOCUMENTS CONSIDERED TO BE RELEVANT**

| Category* | Citation of document, with indication, where appropriate, of the relevant passages | Relevant to claim No. |
| --- | --- | --- |
| X | CN 113647046 A (NOKIA TECHNOLOGIES OY) 12 November 2021 (2021-11-12) see description, paragraphs 0100-0128 | 14-21, 35-42, 56-64 |
| Y | CN 113647046 A (NOKIA TECHNOLOGIES OY) 12 November 2021 (2021-11-12) see description, paragraphs 0100-0128 | 1-13, 22-34, 43-55 |
| Y | CN 108365997 A (HUAWEI TECHNOLOGIES CO., LTD.) 03 August 2018 (2018-08-03) see description, paragraphs 0005-0088 | 1-13, 22-34, 43-55 |
| A | CN 112470512 A (QUALCOMM INC.) 09 March 2021 (2021-03-09) entire document | 1-64 |
| A | CN 110574328 A (SAMSUNG ELECTRONICS CO., LTD.) 13 December 2019 (2019-12-13) entire document | 1-64 |
| A | CN 112448783 A (HUAWEI TECHNOLOGIES CO., LTD.) 05 March 2021 (2021-03-05) entire document | 1-64 |
| A | US 2021250786 A1 (QUALCOMM INC.) 12 August 2021 (2021-08-12) entire document | 1-64 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **08 March 2023** | **08 March 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

| International application No. |
|---|
| **PCT/CN2022/137944** |

**C.     DOCUMENTS CONSIDERED TO BE RELEVANT**

| Category* | Citation of document, with indication, where appropriate, of the relevant passages | Relevant to claim No. |
|---|---|---|
| A | SAMSUNG. "R1-1707951 "Multi-TA procedures for Multi-TRP""<br>*3GPP tsg_ran\WG1_RL1*, No. TSGR1_89, 06 May 2017 (2017-05-06),<br> entire document | 1-64 |

Form PCT/ISA/210 (second sheet) (July 2022)

**INTERNATIONAL SEARCH REPORT**
Information on patent family members

International application No.

**PCT/CN2022/137944**

| Patent document cited in search report | | | Publication date (day/month/year) | Patent family member(s) | | | Publication date (day/month/year) |
|---|---|---|---|---|---|---|---|
| CN | 113647046 | A | 12 November 2021 | EP | 3949219 | A1 | 09 February 2022 |
| | | | | US | 2022182957 | A1 | 09 June 2022 |
| | | | | WO | 2020194103 | A1 | 01 October 2020 |
| CN | 108365997 | A | 03 August 2018 | WO | 2018137703 | A1 | 02 August 2018 |
| CN | 112470512 | A | 09 March 2021 | US | 2020045655 | A1 | 06 February 2020 |
| | | | | US | 10660053 | B2 | 19 May 2020 |
| | | | | WO | 2020028417 | A1 | 06 February 2020 |
| | | | | EP | 3831119 | A1 | 09 June 2021 |
| CN | 110574328 | A | 13 December 2019 | KR | 20190119659 | A | 22 October 2019 |
| | | | | US | 2018262313 | A1 | 13 September 2018 |
| | | | | US | 10708028 | B2 | 07 July 2020 |
| | | | | WO | 2018164515 | A1 | 13 September 2018 |
| CN | 112448783 | A | 05 March 2021 | None | | | |
| US | 2021250786 | A1 | 12 August 2021 | TW | 202139772 | A | 16 October 2021 |
| | | | | KR | 20220131934 | A | 29 September 2022 |
| | | | | EP | 4104375 | A1 | 21 December 2022 |
| | | | | BR | 112022015243 | A2 | 20 September 2022 |
| | | | | WO | 2021162993 | A1 | 19 August 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210015946X